# EUROPEAN PATENT SPECIFICATION

(11) **EP 2 432 972 B1**
(45) Date of publication and mention of the grant of the patent: **11.07.2018**
(21) Application number: 10778523.0
(22) Date of filing: 24.05.2010
(51) Int. Cl.: F03D 13/10, F03D 13/40

(54) **SYSTEMS AND METHODS FOR TRANSPORTING AND ASSEMBLING SEGMENTED WIND TURBINE BLADES**
SYSTEME UND VERFAHREN ZUM TRANSPORT UND ZUSAMMENBAU SEGMENTIERTER WINDTURBINENSCHAUFELN
SYSTÈMES ET PROCÉDÉS PERMETTANT DE TRANSPORTER ET D'ASSEMBLER DES PALES D'ÉOLIENNE SEGMENTÉES

(30) Priority: 22.05.2009 US 180816 P; 22.05.2009 US 180812 P
(43) Date of publication of application: 28.03.2012
(73) Proprietor: Vestas Wind Systems A/S, 8200 Aarhus N (DK)
(72) Inventor: ARENDT, Cory, P., Huntington Beach, CA 92649 (US); BAKER, Myles, L., Long Beach, CA 90807 (US); VILHAUER, Sheldon, Carson, CA 90746 (US); JOHNSON, Michael, Huntington Beach, CA 92649 (US)
(74) Representative: Vestas Patents Department
(86) International application number: PCT/US2010/035957
(87) International publication number: WO 2010/135737

(56) References cited:
- US-A- 4 607 578
- US-A- 6 027 295
- US-A1- 2005 031 431
- US-A1- 2006 251 517
- US-A1- 2007 177 954
- US-A1- 2007 189 895
- US-A1- 2008 069 699
- US-A1- 2008 069 699

## Description

### TECHNICAL FIELD

The present disclosure is directed generally to systems and methods for transporting and assembling segmented wind turbine blades, including wind turbine blades having multiple segments aligned along a spanwise axis.

### BACKGROUND

As fossil fuels become scarcer and more expensive to extract and process, energy producers and users are becoming increasingly interested in other forms of energy. One such energy form that has recently seen a resurgence is wind energy. Wind energy is typically harvested by placing a multitude of wind turbines in geographical areas that tend to experience steady, moderate winds. Modern wind turbines typically include an electric generator connected to one or more wind-driven turbine blades, which rotate about a vertical axis or a horizontal axis.

In general, larger (e.g., longer) wind turbine blades produce energy more efficiently than do short blades. Accordingly, there is a desire in the wind turbine blade industry to make blades as long as possible. However, long blades create several challenges. Such blades are heavy and therefore have a significant amount of inertia, which can reduce the efficiency with which the blades produce energy, particularly at low wind conditions. In addition, long blades are difficult to manufacture and in many cases are also difficult to transport. Accordingly, there remains a need for large, efficient, lightweight wind turbine blades, and suitable methods for transporting and assembling such blades. By way of background, US2008/0069699 describes a wind turbine having at least two sections, which sections are joined with a toothed connection.

### SUMMARY OF INVENTION

According to a first aspect of the present invention there is provided a system for assembling spanwise segments of a wind turbine blade according to claim 1. According to a second aspect of the present invention there is provided a method for assembling spanwise segments of a wind turbine blade according to claim 12. Further preferable features are set out in the dependent claims.

### BRIEF DESCRIPTION OF THE DRAWINGS

Figure 1 is a partially schematic, isometric illustration of a wind turbine system having blades configured in accordance with an embodiment of the disclosure.
Figure 2 is a partially schematic, elevation view of a wind turbine blade having a segmented structure in accordance with an embodiment of the disclosure.
Figure 3 is a partially schematic, side elevation view of an arrangement of transport platforms for assembling segmented wind turbine blades in accordance with an embodiment of the disclosure.
Figure 4 is a partially schematic, end isometric view of a guide structure having a support carrying a wind turbine blade segment for alignment and attachment in accordance with an embodiment of the disclosure.
Figure 5 is an enlarged, partially schematic illustration of a portion of the support shown in Figure 4.
Figure 6A is an enlarged, partially schematic illustration of another portion of the support shown in Figure 4.
Figure 6B is an enlarged, partially schematic illustration a portion of the support shown in Figure 4 having a guide roller arrangement configured in accordance with another embodiment of the disclosure.
Figure 7A is a partially schematic, isometric illustration of a guide structure having a motion device configured in accordance of an embodiment of the disclosure.
Figure 7B is a partially schematic, isometric illustration of the guide structure shown in Figure 7A with the carrier removed in accordance of an embodiment of the disclosure.
Figure 8 is a partially schematic, side elevation view of the guide structure shown in Figure 7A.
Figure 9 is a partially schematic, isometric illustration of a support carrying a portion of a wind turbine blade segment in accordance with an embodiment of the disclosure.
Figure 10A is a partially schematic, isometric illustration of a platform alignment system configured in accordance with an embodiment of the disclosure.
Figures 10B and 10C are partially schematic illustrations of transport platforms positioned in preparation for joining wind turbine blade segments in accordance with a particular embodiment of the disclosure.
Figure 10D is a partially schematic, side elevation view of two opposing end portions of wind turbine blade segments positioned on adjacent transport platforms prior to assembly in accordance with an embodiment of the disclosure.
Figure 11A is a partially schematic, side elevation view of a wind turbine blade spar having multiple portions, each with layers that terminate at staggered locations to form a non-monotonically varying bond line.
Figure 11B is an illustration of an embodiment of the structure shown in Figure 11A with clamps positioned to prevent or limit delamination in accordance with an embodiment of the disclosure.
Figure 11C is an enlarged illustration of a portion of the spar shown in Figure 6B.
Figure 11D is a partially schematic, isometric view of two opposing end portions of a wind turbine blade spar prior to joining.
Figure 11E is a partially schematic, isometric view of the two opposing spar end portions of Figure 11D after joining, in accordance with an embodiment of the disclosure.
Figure 12 is a partially schematic, isometric view of two opposing end portions of wind turbine blade segments prior to joining in accordance with an embodiment of the disclosure.
Figure 13 illustrates an apparatus for applying heat and/or pressure to a bonded wind turbine blade spar joint in accordance with an embodiment of the disclosure.
Figures 14A-14F illustrate systems and methods for assembling and transporting wind turbine blades in accordance with further embodiments of the disclosure.

### DETAILED DESCRIPTION

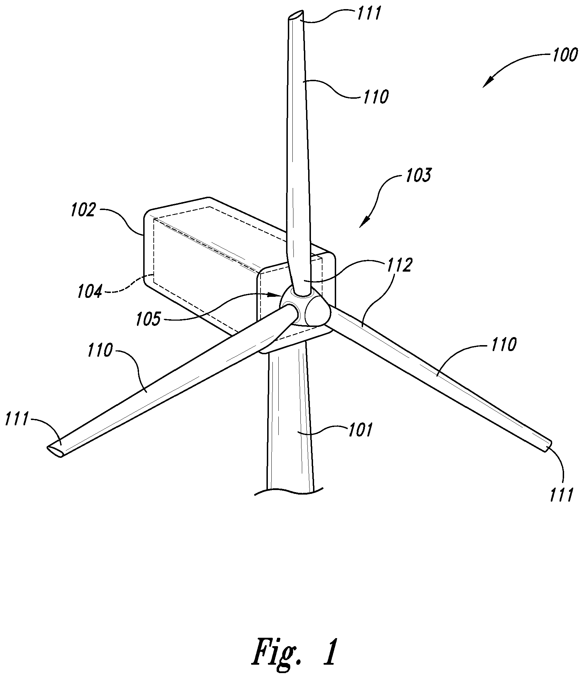

The present disclosure is directed generally to systems and methods for efficiently transporting and assembling wind turbine blade sections. Several details describing structures or processes that are well-known and often associated with such systems and methods, but that may unnecessarily obscure some significant aspects of the disclosure, are not set forth in the following description for purposes of brevity. Moreover, although the following disclosure sets forth several embodiments, several other embodiments can have different configurations or different components than those described herein. In particular, other embodiments may have additional elements or may lack one or more of the elements described below with reference to Figures 1-14F.

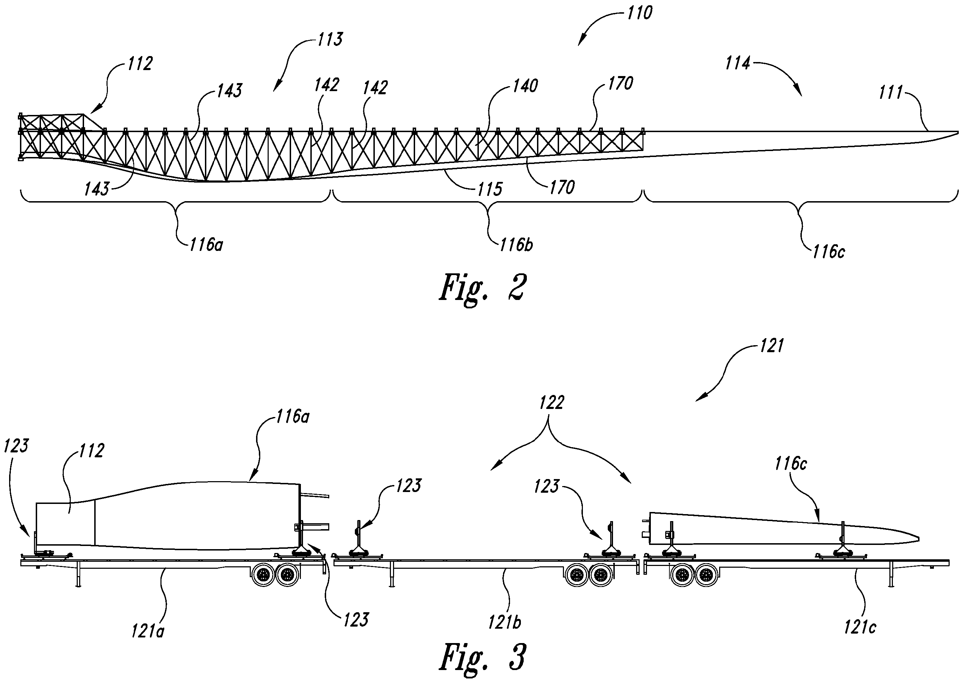

Figure 1 is a partially schematic, isometric illustration of an assembled wind turbine system 100 that includes a wind turbine 103 having blades 110 configured in accordance with an embodiment of the disclosure. The wind turbine 103 includes a tower 101 (a portion of which is shown in Figure 1), a housing or nacelle 102 carried at the top of the tower 101, and a generator 104 positioned within the housing 102. The generator 104 is connected to a shaft having a hub 105 that projects outside the housing 102. The blades 110 each include a hub attachment portion 112 at which the blades 110 are connected to the hub 105, and a tip 111 positioned radially or longitudinally outwardly from the hub 105. In an embodiment shown in Figure 1, the wind turbine 103 includes three blades 110 connected to a horizontally-oriented shaft. Accordingly, each blade 110 is subjected to cyclically varying loads as it rotates between the 12:00, 3:00, 6:00 and 9:00 positions, because the effect of gravity is different at each position. In other embodiments, the wind turbine 103 can include other numbers of blades connected to a horizontally-oriented shaft, or the wind turbine 103 can have a shaft with a vertical or other orientation. In any of these embodiments, the blades 110 can have structures configured in accordance with the arrangements described in further detail below with reference to Figure 2.

Figure 2 is a partially schematic, partially cut-away illustration of one of the blades 110 shown in Figure 1. The blade 110 extends outwardly in a radial direction from an inner region 113 that includes the hub attachment portion 112, to an outer region 114 that includes the tip 111. In particular embodiments, the internal structure of the blade 110 can be different at the inner region 113 than at the outer region 114. For example, the inner region 113 can include a truss structure 140 formed from a plurality of longitudinally extending beams or spars 170, chordwise extending ribs 142, and truss members 143 connected between the spars 170 and the ribs 142. The truss structure 140 can be surrounded by a skin 115 (most of which is removed in Figure 2) that presents a smooth, aerodynamic surface to the wind during operation. The outer region 114 can include a non-truss structure. As used herein, the term "truss structure" refers generally to a load-bearing structure that includes generally straight, slender members forming closed shapes or units (e.g., triangular units). The term "non-truss structure" refers generally to a load-bearing structure having an arrangement that does not rely on, or does not primarily rely on, straight slender members forming closed-shape units for strength.

In a particular aspect of an embodiment shown in Figure 2, the blade 110 includes three segments 116, shown as a first segment 116a, a second segment 116b, and a third segment 116c. The first and second segments 116a, 116b can each have the truss structure 140 described above, and the third segment 116c can have a non-truss structure. Accordingly, the blade 110 can have a truss structure for the inner two-thirds of its span, and a non-truss structure for the outer one-third of its span. In other embodiments, these values can be different, depending, for example, on the size, shape and/or other characteristics of the blade 110. In still further embodiments, the blade 110 can have other numbers and/or arrangements of segments. For example, the blade 110 can have a non-truss structure for the majority of the length of each segment 116, and a truss structure at the joints between neighboring sections. The segments 116 can be manufactured individually at one or more sites, and then connected to each other at a manufacturing facility, or at an end user installation site. For example, the segments 116 can each be sized to be carried by a 53-foot or other suitably sized container, trailer, or other transport device for shipment, as will be described in further detail later. In other embodiments, one or more of the segments (e.g., the first segment 116a and the second segment 116b) can be built entirely at the installation site.

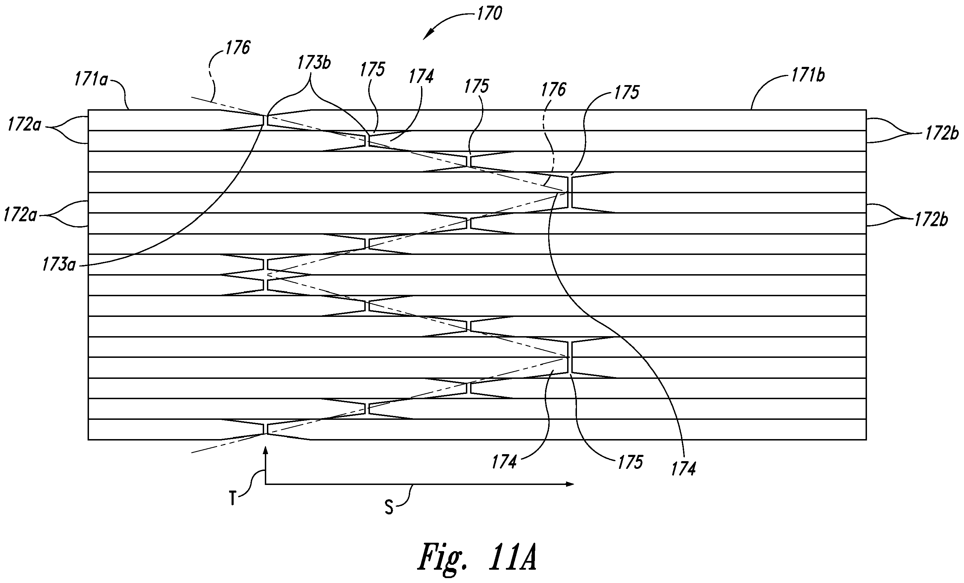

In any of the foregoing embodiments, individual segments 116 can include ribs 142, truss members 143, and portions of the spars 170 that extend for the length of the segment 116. The segments 116 can be joined to each other by joining adjacent spar portions, e.g., as discussed later with reference to Figures 11A-13, and connecting truss members 143 between the segments 116. In any of these embodiments, the skin 115 can be laid up on the truss structure 140 with or without forming a joint at the interface between adjacent segments 116. For example, the spar portions can be joined at a location between two neighboring ribs 142, and a relatively small panel of skin 115 can be laid over the spar joint and the two neighboring ribs 142. The neighboring ribs 142 can be spaced apart by about one meter in one embodiment, and by other values in other embodiments. Larger panels of the skin 115 can be laid inboard and outboard of the small panel. In another embodiment, the skin 115 can have joints not aligned with spar joints, or no spanwise joints, and can be laid up as a continuous element. In any of these embodiments, the skin 115 can be attached (e.g., bonded or fastened, adhesively, ultrasonically or otherwise) to the ribs 142 alone, or to the ribs 142 and the spars 170. In many of these embodiments, the truss structure 140 can serve as primary structure for carrying shear and bending loads in the blade 110. Further details of several embodiments of the blade 110 are described in WO2010/065928.

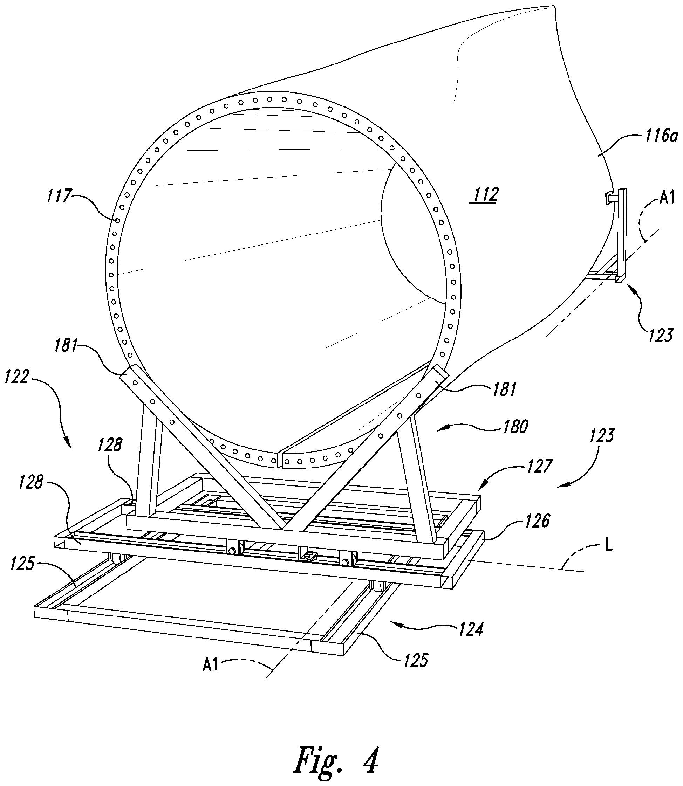

Figure 3 is a partially schematic, side elevation view of an arrangement for transporting, aligning, and assembling the blade segments described above with reference to Figure 2. In one aspect of this embodiment, the arrangement can include multiple transport platforms or devices 121. For example, the arrangement can include three such platforms, shown in Figure 3 as a first transport platform 121a, a second transport platform 121b, and a third transport platform 121c. The transport platforms 121 can include truck-drawn highway-compatible trailers, as shown in a particular embodiment illustrated in Figure 3. In other embodiments, the transport platforms 121 can include other devices e.g., railroad cars, containers, dollies, trolleys, carts, or barges. In any of these embodiments, each of the transport platforms 121 can carry corresponding blade segments 116, two of which (the first and third segments 116a, 116c) are shown in Figure 3. The blade segments 116 can be assembled blade segments, e.g., at least partially assembled blade segments. Accordingly, the blade segments are approximately full length, though they may undergo additional assembly steps after arriving at a final assembly site. One or more of the transport platforms 121 can carry a guide structure 122 (or portions of the guide structure 122) which is used to align the corresponding blade segments 116 with each other and move the corresponding blade segments 116 into position for joining. In a particular embodiment shown in Figure 3, the guide structure 122 can include multiple supports 123 carried by one or more of the transport platforms 121. For example, each transport platform 121 can include two supports 123, one positioned at each end of a corresponding one of the blade segments 116. In general (e.g., except for the support 123 located at the hub attachment portion 112 of the first blade segment 116a), the supports 123 can be axially offset from the ends of the blade segments to which they are attached. Accordingly, neighboring blade segments can overhang the supports 123, thus preventing the supports 123 from interfering with each other when the neighboring blade segments are moved toward each other for attachment. Each transport platform 121a, 121b, 121c can carry supports 123 that move the corresponding blade segment along a corresponding axial motion path A1, A2, A3, respectively. Further details at this arrangement are described below with reference to Figures 4-10C and 14A-14F.

Figure 4 is a partially schematic end view of the first blade segment 116a shown in Figure 3, carried by two supports 123. Many of the following features are common to both supports 123, but are shown and described in the context of the near support 123 shown in Figure 4. The support 123 can include a base 124 having one or more axial guides 125 (two are shown in Figure 4). The support 123 can further include a first portion 126 carried by the base 124, and a second a portion 127 carried by the first portion 126. The first portion 126 can be movable relative to the base 124 along a restricted axial guide path A1, and the second portion 127 can be movable relative to the first portion 126 along a restricted lateral guide path L. Accordingly, the first portion 126 can include one or more lateral guides 128 (two are shown in Figure 4) that facilitate the motion of the second portion 127 along the lateral guide path L. The second portion 127 in turn supports a carrier 180 that is releasably engaged with the first blade segment 116a. In a particular aspect of this embodiment, the carrier 180 includes two engagement portions 181, each of which is engaged with a flange 117 at the hub attachment portion 112 of the first blade segment 116a. The engagement portions 181 can be attached to the flange 117 with bolts, pins, or other suitable, releasable attachment devices. In any of these embodiments, the support 123 can facilitate both lateral and axial motion of the blade segment 116a, allowing it to be aligned with and then attached to a mating blade segment.

In a particular embodiment shown in Figure 4, both of the supports 123 move along the same axial guide path A1. In other embodiments, the supports 123 may be laterally offset from each other, and may accordingly move along different axial guide paths. In such cases, the two axial guide paths associated with a single blade segment may be parallel to prevent binding, and/or the associated supports may have a rotational degree of freedom. Such an embodiment may be used for blade segments (such as the third blade segment 116c shown in Figure 3) that have a significant amount of lateral or chordwise offset from one end of the segment to the other.

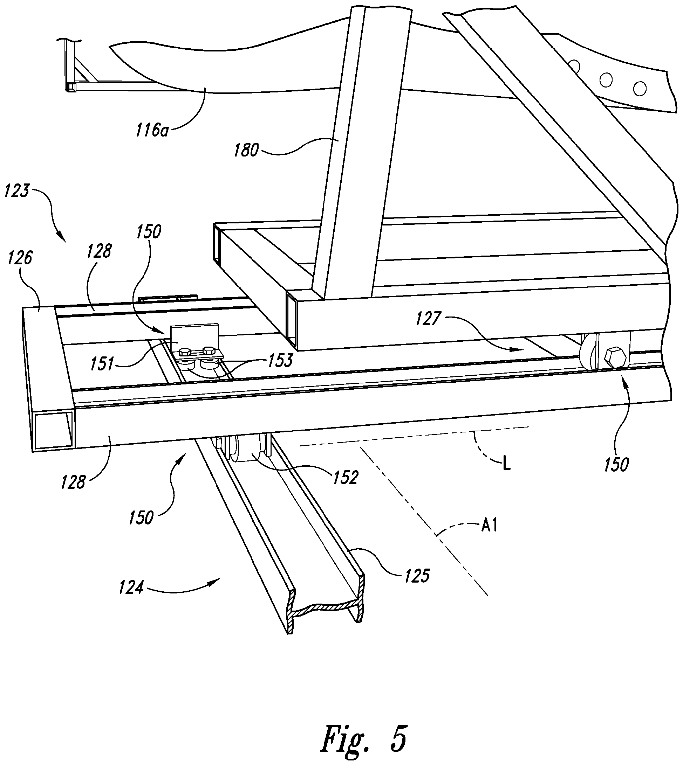

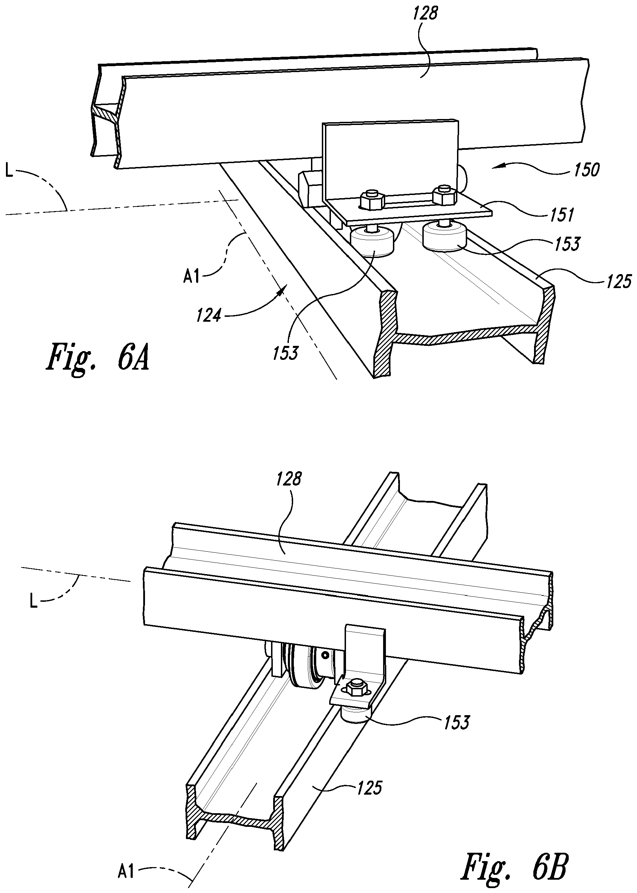

Figure 5 is an enlarged isometric illustration of part of the support 123 shown in Figure 4. As shown in Figure 5, the second portion 127 of the support 123 includes multiple roller assemblies 150 (one of which is visible in Figure 5) that facilitate the lateral motion of the second portion 127 along the lateral guides 128 carried by the first portion 126. The first portion 126 includes multiple roller assemblies 150 that facilitate axial motion of the first portion 126 along the axial guides 125 carried by the base 124. Each of the roller assemblies 150 can include a bracket 151 carrying one or more rollers, including a load roller 152. The load rollers 152 bear the weight (or a majority of the weight) of the structure to which they are attached, and transmit loads to the corresponding guide below. The roller assemblies 150 can also include guide rollers 153 described further below with reference to Figure 6A-6B.

Referring now to Figure 6A, the roller assembly 150 can include multiple guide rollers 153 that engage with the corresponding guide along which the roller assembly 150 moves (e.g., the axial guide 125 as shown in Figure 6A). In a particular aspect of this embodiment, the axial guide 125 can include a C-channel or I-beam, and the guide rollers 153 can engage an inner surface of the upwardly facing flanges of the axial guide 125. In other embodiments, other arrangements can be used to guide the motion of the first portion 126 relative to the base 124. For example, as shown in Figure 6B, the guide rollers 153 can be positioned at the outer surfaces of the upwardly facing flanges of the axial guide 125. In any of these embodiments, the guides 125, 128 and the associated roller assemblies 150 are positioned to permit motion that is restricted or limited to be along only the axial guide path A1 and the lateral guide path L, respectively.

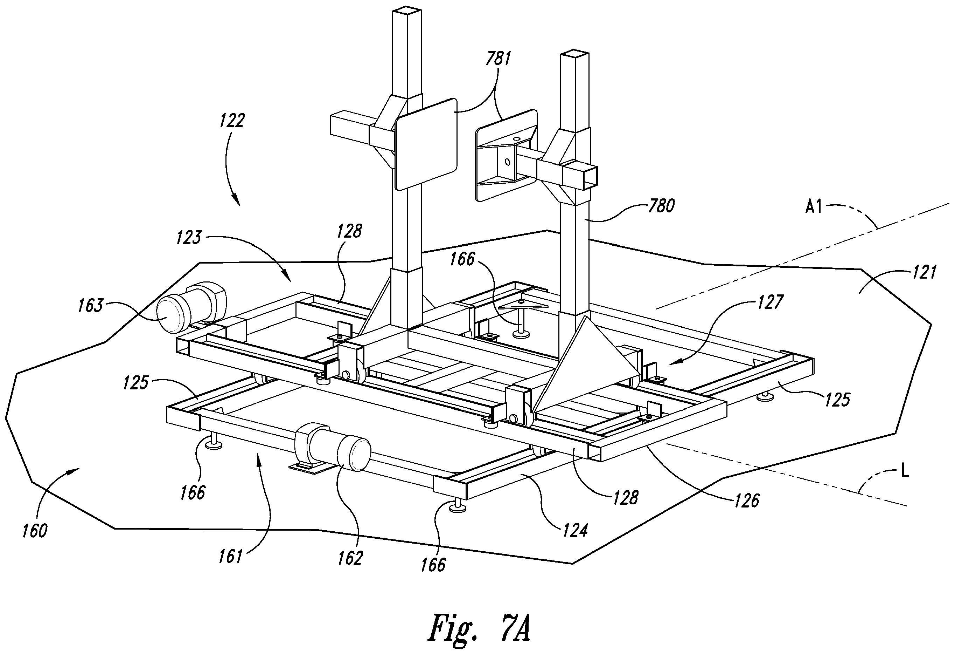

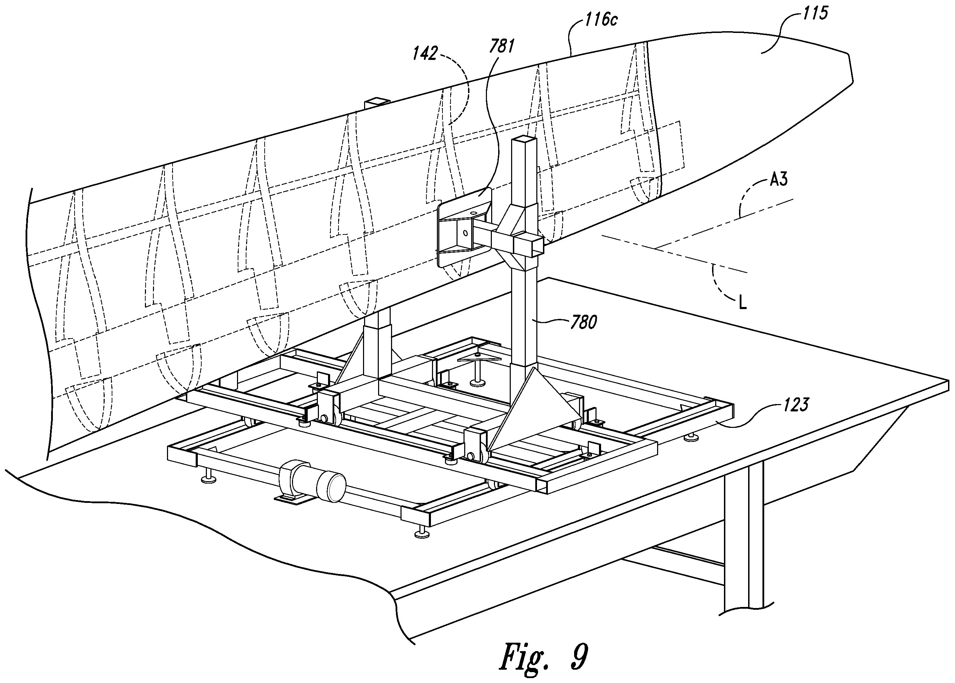

Figure 7A is a partially schematic, isometric illustration of an embodiment of the support 123 illustrating selected features in addition to those described above with reference to Figures 4-6B. In one aspect of this embodiment, the support 123 can include a carrier 780 having vertically upstanding members carrying engagement portions 781 positioned to engage laterally outwardly facing surfaces of a corresponding blade segment, as will be described further below with reference to Figure 9. The support 123 can also include a motion device 160 that facilitates relative motion between the components of the support 123.

In an embodiment shown in Figure 7A, the motion device 160 can facilitate motion of the components along three orthogonal axes. For example, the motion device 160 can include a base height adjuster 161 that moves the base 124 in a generally vertical direction relative to the transport platform 121, an axial motion actuator 162 that moves the first portion 126 relative to the base 124 along the axial guide path A1, and a lateral motion actuator 163 that moves the second portion 127 relative to the first portion 126 along the lateral guide path L. The motion provided by the motion device 160 can be fully manual, fully powered, or a combination of the two. For example, the base height adjustor 161 can include multiple threaded studs 166 located at several locations around the base 124, which are manually rotated to adjust the height of the base 124 and/or adjust the planarity of the base 124. The axial motion actuator 162 can include a motor or other powered device carried by the base 124 and operatively coupled to the first portion 126 to drive the first portion 126 along the axial guides 125. The lateral motion actuator 163 can include a motor or other powered device carried by the first portion 126 and operatively coupled to the second portion 127 to drive it along the lateral guides 128. Accordingly, the motion device 160 can be used to move the carrier 780 to a position and orientation suitable for connecting the blade segment (not shown in Figure 7A) with a neighboring blade segment.

In a particular embodiment, once the carrier 780 has the desired position, the resistance provided by the threads of the studs 166 can prevent the carrier 780 from changing its elevation. Optionally, the studs 166 can be further secured, e.g., with locknuts. Similarly, the resistance provided by the windings and/or internal gearing of the axial motion actuator 162 and the lateral motion actuator 163 can prevent the carrier 780 from moving from the desired position in the axial and lateral directions, respectively. In other embodiments, separate locking devices can be used for this purpose.

In any of the foregoing embodiments, the motion device 160 can also be automated. For example, the motion device 160 can include a processor (e.g., a computer-based controller), and an input device. An operator can input a desired location and/or orientation for the carrier 780, and the motion device 160 can automatically drive the carrier 780 to the desired location and/or orientation using one or more sensors (e.g., position sensors) in a closed loop arrangement. In still further embodiments, the actuators 162, 163 can be removable, so that they can be moved from one portion of a support 123 to another, or from one support 123 to another, thereby reducing the number of actuators required to position the blade segments.

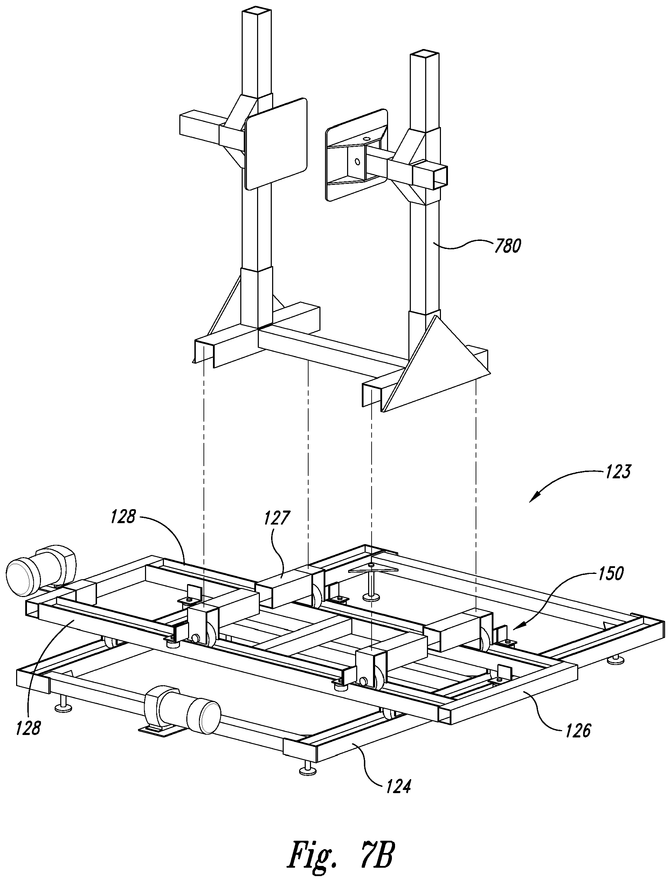

As shown in Figure 7B, the support 123 can be deliberately configured to allow particular elements to be rapidly assembled and disassembled during normal use. For example, the carrier 780 can be removed from rest of the support 123 during transit. In particular, the carrier 780 can be lifted away from second portion 127 (including the roller assemblies 150 engaged with the lateral guides 128), the first portion 126, and the base 124. The carrier 780 can then be placed on a transport platform without the roller assemblies 150 potentially allowing the carrier 780 to move. When the carrier 780 is to be moved relative to the transport platform prior to assembling the associated blade segments, the first portion 126, second portion 127 and base 124 can be slipped under the carrier 780 as a unit to allow the carrier 780 to move.

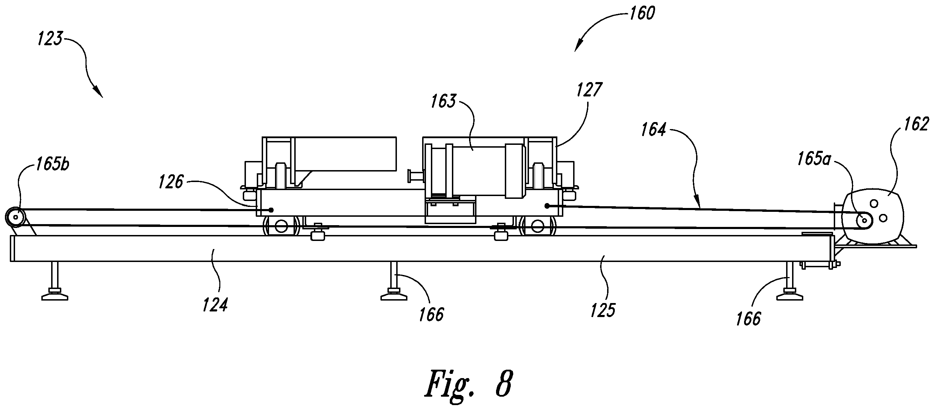

Figure 8 is a partially schematic, side elevation view of a portion of the support 123 shown in Figures 7A-7B, illustrating further details of a particular embodiment of the motion device 160. As shown in Figure 8, the axial motion actuator 162 can be coupled to the first portion 126 with a drive link 164 that allows for motion in two opposing directions along the axial guides 125. In a particular aspect of this embodiment, the axial motion actuator 162 includes a rotary motor having a shaft connected to a drive sprocket 165a which drives a chain connected at one end to one side of the first portion 126. The opposite end of the chain is wrapped around a guide sprocket 165b and connected to the opposite end of the first portion 126. In other embodiments, the drive link 164 can include other devices, for example, a direct drive device. The lateral motion actuator 163 can be coupled to the second portion 127 with a similar drive link.

Figure 9 is a partially schematic, isometric illustration of the support 123 releasably attached to the third blade segment 116c described above with reference to Figure 2. In one aspect of this embodiment, the engagement portions 781 are attached directly to a corresponding rib 142 of the blade segment 116c. In another embodiment, the engagement portions 781 are attached to a structure carried by the rib 142, e.g. one of the truss attachment members described WO2010/065928. In any of these embodiments, the engagement portions 781 can be releasably attached to the third blade segment 116c with threaded fasteners or other suitable structures. Accordingly, a portion of the skin 115 overlying this portion of the blade segment 116c can be removed or omitted while the blade segment 116c is carried by the support 123. After the support 123 has been disconnected from the blade segment 116c during an assembly and installation process, the missing skin portion can be attached in place over the rib 142. Alternatively, the skin 115 can extend over the rib 142, but can have one or more holes that receive the threaded fasteners. These holes can be filled after the support 123 has been disconnected.

As is also shown in Figure 9, the supports 123 can be attached to the third blade segment 116c before the blade segment 116c is placed on a corresponding transport platform 121c (Figure 3). For example, the supports 123 or the carriers 780 (one of which is visible in Figure 9) can each be lifted with a forklift, overhead crane or other suitable device and then placed on the transport platform 121c while attached to the third blade segment 116c. In another embodiment, the support 123 can first be placed on the transport platform 121c, and the third blade segment 116c can then be attached to the supports 123. Either of the foregoing arrangements can be used for any of the blade segments 116a-116c.

In a particular embodiment, the carrier 780 is detached from the second portion 127, the first portion 126 and the base 124 before the blade segment 116c is placed on the transport platform, as described above with reference to Figure 7B. Accordingly, the carrier 780 can rest directly on the transport platform while the blade segment 116c is transported to the assembly site, without allowing motion along the axial motion path A3 or the lateral motion path L. When the transport platform reaches the final assembly site, the carrier 780 can be lifted while the rest of the support 123 is re-inserted below the carrier 780. The support 123 is then ready for positioning and alignment. In other embodiments, other arrangements can be used to restrict the carrier 780 from moving. For example, the roller assemblies 150 (Figure 7B) can be locked or retracted during transit. An advantage of embodiments in which the base 124, first portion 126 and second portion 127 are removed as a unit is that this part of the support 123 can be a modular unit, and can be moved from one support 123 to another, thus reducing the number of such modular units required to position a set of blade segments.

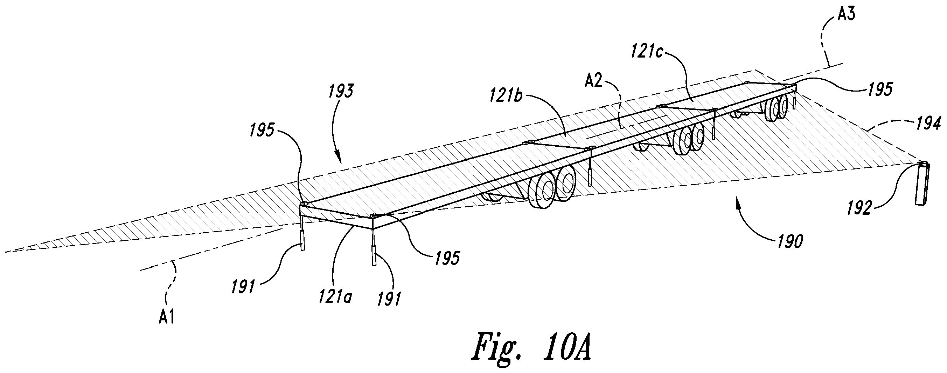

Figure 10A is a partially schematic, isometric illustration of a platform alignment system 190 used to align the three transport platforms 121a, 121b, 121c described above with reference to Figure 3. For purposes of illustration, the guide structures 122 and blade segments 116 described above are not shown in Figure 10A. In a particular aspect of the illustrated embodiment, the platform alignment system 190 can include one or more platform height adjustors 191. For example, the platform height adjustors 191 can include hydraulic cylinders, pneumatic cylinders, jack screws, or other devices positioned at one or more locations of each of the transport platforms 121 to adjust the height of the platforms, as well as the tilt of the platforms 121. The platform height adjustors 191 can be adjusted manually or automatically in response to an indication that the corresponding transport platforms 121 are not at an appropriate height or tilt orientation. To provide this input, the platform alignment system 190 can include an emitter 192 that emits radiation received by one or more receivers 193 located at the transport platforms 121. For example, the emitter 192 can include a laser that emits a laser beam and rotates to produce a laser plane 194. The receiver 193 can include multiple receiver elements 195 carried by each of the transport platforms 121. In a particular embodiment, each transport platform 121 can include a receiver element 195 located at each corner of the transport platform 121. Accordingly, when the emitter 192 is activated, and produces the radiation plane 194 at a desired height and orientation (e.g., horizontal), the operator can adjust the platform height adjustors 191 until each of the receiver elements 195 carried by each of the transport platforms 121 indicates that the transport platform is at the correct height and orientation. This process can also be automated so as to operate in a closed-loop fashion based on inputs from the receiver elements 195.

In other embodiments, the alignment system can have other arrangements. For example, the alignment system 190 can include multiple emitters 192, and/or a single receiver 193. In still further embodiments, the alignment system can include components that do not rely on emitting or receiving radiation for suitable operation.

As described above, the platform alignment system 190 can be used to align each of the transport platforms 121 relative to the others in a generally horizontal or other desired plane. In addition, each of the transport platforms 121 can be aligned axially. For example, each of the transport platforms 121a-121c can include a corresponding axial guide path A1-A3 along which the corresponding blade segment 116 is moved. In a particular embodiment, each of the axial guide paths A1-A3 is aligned along a common axis. In other embodiments, however, the guide paths may be angularly offset from each other, depending upon the desired orientation of the plane at the interface between the neighboring blade segments. Also, as discussed above with reference to Figure 4, the individual supports carried by each of the transport platforms 121 may move along different (though typically parallel) guide paths, depending upon the shape of the blade segment carried by the supports. In any of the foregoing embodiments, the platform alignment system 190 may also be configured to align each of the axes A1-A3 relative to each other. In other embodiments, however, an operator can adequately align the axes A1-A3 visually. The blade segments carried by the platforms may be more finely aligned using the lateral motion actuators 163 described above.

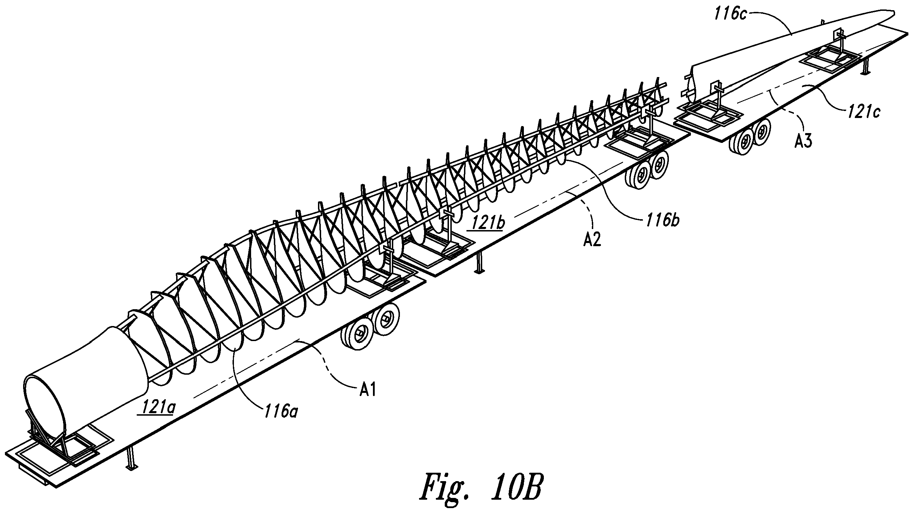

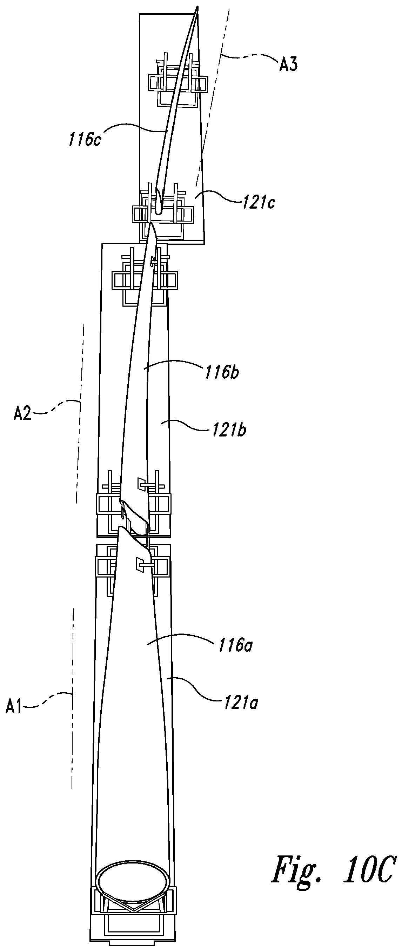

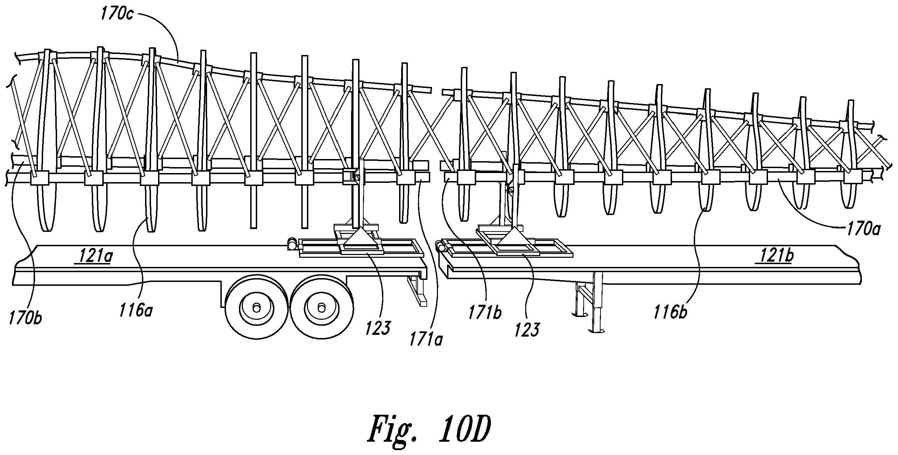

Figures 10B and 10C illustrate the transport platform 121a-c aligned to attach the corresponding blade segments 116a-116c. For purposes of illustration, the first and second blade segments 116a, 116b are shown in Figures 10B and 10D without the skins attached. The skins can be attached either before or after the blades are shipped to an assembly site via the transport platforms 121. As shown in Figures 10B-10C the first and second axial guide paths A1 and A2 are co-linear, and the third guide path A3 is offset due to the curvature of the blade 110. Once the transport platforms 121 are properly aligned with each other, the corresponding blade segments carried by the transport platforms 121 may be attached. In a particular embodiment in which more than two transport platforms 121 are used to carry the requisite number of blade segments, two blade segments may be connected to each other before adding additional segments. For example, the first and second segments 116a, 116b carried by the first and second transport platforms 121a, 121b, respectively can be connected to each other before connecting the third blade segment 116c carried by the third transport platform 121c to the assembled first and second segments. In such cases, all three transport platforms 121a-121c can be initially aligned with each other, and the connection between neighboring segments can be completed sequentially. In another embodiment, the first two transport platforms 121a-121b can be aligned with each other and the associated segments 116a, 116b connected, and then the third transport platform 121c can be aligned with the first two transport platforms 121a-121b while the third segment 116c connected to the assembled first and second segments. In other embodiments, the transport platforms 121 may be aligned in other manners, and/or the blade segments may be connected in other sequences.

Figure 10D is a side elevation view of a portion of the first blade segment 116a and the second blade segment 116b positioned on corresponding first and second transport platforms 121a, 121b. As this view illustrates, each blade segment 116a, 116b includes multiple spars 170, e.g., a first spar 170a, a second spar 170b and a third spar 170c. Each spar 170 has a first end portion 171a at the first segment 116a and a second end portion 171b at the second segment 116b. The first end portions 171a of the first blade segment 116a are aligned with the corresponding second end portions 171b of the second blade segment 116b. In this configuration, the first and second blade segments 116a, 116b are ready to be joined together as described below with reference to Figures 11A-13.

Figure 11A is a partially schematic, side elevation view of a joint between the first and second end portions 171a, 171b of a representative spar 170. The joint can be formed along a non-monotonically varying (e.g., zig-zagging) bond line 176. Such a bond line 176 is expected to produce a stronger bond between the first and second portions 171a, 171b than is a straight or diagonal bond line.

The first portion 171a can include multiple, stacked, laminated first layers 172a, and the second portion 171b can include multiple, stacked, laminated second layers 172b. In another embodiment, the layers 172a, 172b can be made in one piece without gluing. In a particular embodiment, the layers 172a, 172b can be formed from a unidirectional fiber material (e.g., fiberglass or a carbon fiber) and a corresponding resin. Each of the layers 172a, 172b can be formed from a single ply or multiple plies (e.g., six plies). The layers 172a, 172b can be prepared layers, hand lay-ups, pultrusions, or can be formed using other techniques, e.g., vacuum-assisted transfer molding techniques. The first layers 172a terminate at first terminations 173a, and the second layers 172b terminate at second terminations 173b. Neighboring terminations 173a, 173b located at different positions along a thickness axis T can be staggered relative to each other along a span axis S to create the zig-zag bond line 176. This arrangement produces projections 174 and corresponding recesses 175 into which the projections 174 fit. In a particular aspect of this embodiment, each layer has a termination that is staggered relative to its neighbor, except where the bond line 176 changes direction. At such points, two adjacent layers can be terminated at the same location and bonded to each other, to prevent a single layer from being subjected to increased stress levels. The zig-zag bond line 176 can be symmetric, as shown in Figure 11A, or asymmetric in other embodiments. In still further embodiments, the bond line 176 can be scarfed or can have a zig-zag shape in a direction transverse to the plane of Figure 11A, as described further in WO2010/065928.

During a representative manufacturing process, each of the first layers 172a are stacked, bonded and cured, as are each of the second layers 172b, while the two portions 171a, 171b are positioned apart from each other. The layers 172, 172b can be pre-cut before stacking so that when stacked, they form the recesses 175 and projections 174. After the two portions 171a, 171b have been cured, the recesses 175 and/or projections 174 can be coated and/or filled with an adhesive. The two portions 171a, 171b are then brought toward each other so that projections 174 of each portion are received in corresponding recesses 175 of the other. The joint region can then be bonded and cured.

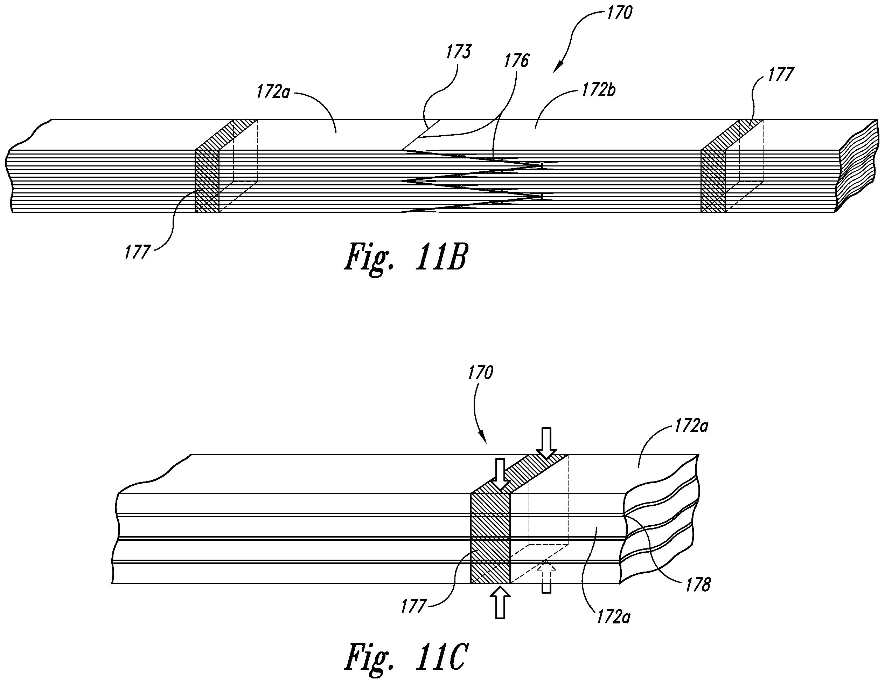

Figure 11B is an illustration of a spar 170 having a bond line 176 generally similar to that described above with reference to Figure 11A. As is also shown in Figure 11B, the spar 170 can include one or more clamps or straps 177 that are positioned at or near the bond line 176. The clamps 177 can be positioned to prevent or halt delamination that might result between any of the layers in the composite spar 170. For example, as shown in Figure 11C, if a potential delamination 178 begins between two layers 172a, the compressive force provided by the clamp 177 can prevent the delamination 178 from spreading further in a spanwise direction. The clamp 177 can be positioned where it is expected that the potential risk of delamination is high, e.g., at or near the termination 173 of the outermost layers 172a, 172b shown in Figure 11B. In other embodiments, the function provided by the clamps 177 can be provided by other structures, e.g., the truss attachment members described further in WO2010/065928.

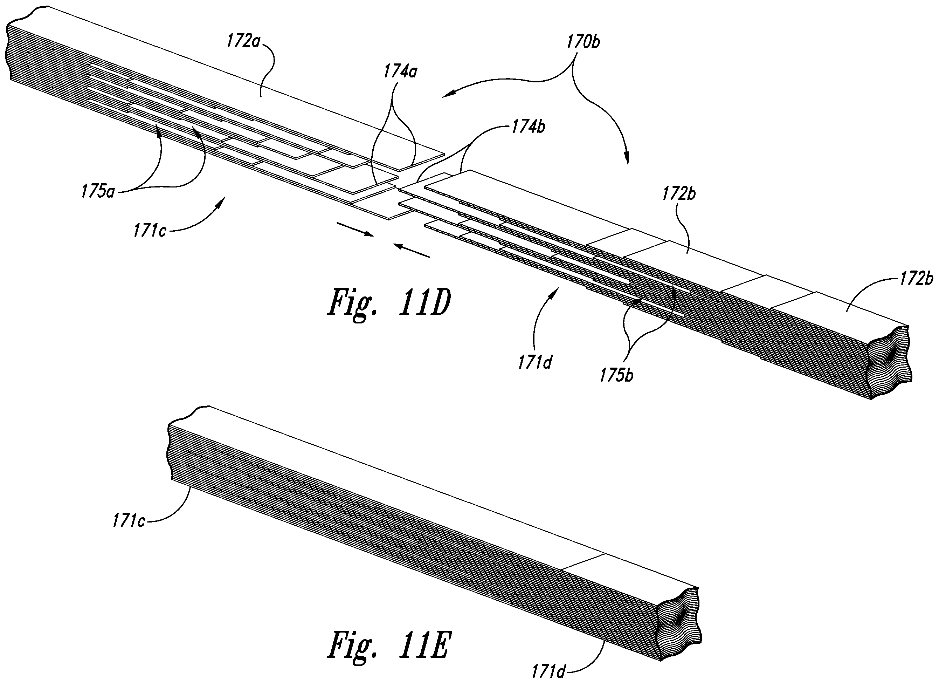

Figure 11D is an enlarged isometric view illustrating a third end portion 171c and an opposing fourth end portion 171d of the second spar 170b (also shown in Figure 10D) prior to being joined together. As described above with reference to Figure 11A, the second spar 170b can be formed from a plurality of layers 172 (e.g., first layers 172a and second layers 172b). In the illustrated embodiment, the first layers 172a produce first projections 174a and corresponding first recesses 175a. Similarly, the second layers 172b produce second projections 174b and corresponding second recesses 175b. The corresponding projections 174 and recesses 175 form a staggered, zig-zag bond line between the opposing spar end portions 171c and 171d when they are subsequently joined together as illustrated in Figure 11E.

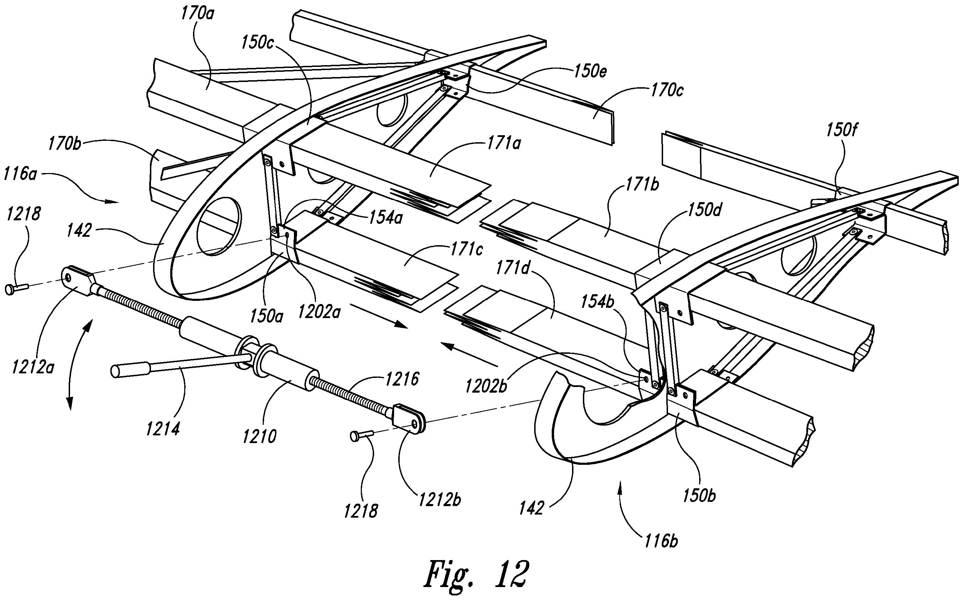

Figure 12 is an enlarged, partially schematic isometric view illustrating a method of joining the first blade segment 116a to the second blade segment 116b in accordance with an embodiment of the disclosure. As this view illustrates, the opposing end portions 171 of the corresponding spars 170 are initially separated from each other but are axially aligned. Referring first to the second spar 170b, a first truss attachment member 150a on the first blade segment 116a can include a first lug or truss attachment portion 154a having a first aperture 1202a. Similarly, the opposite second truss attachment member 150b on the second blade segment 116b can include a corresponding second truss attachment portion 154b having a second aperture 1202b. Third and fourth truss attachment members 150c, 150d on the first spar 170a, and fifth and sixth truss attachment members 150e, 150f on the third spar 170c, can also include similar truss attachment portions having corresponding apertures.

To join the first blade segment 116a to the second blade segment 116b, a push/pull device 1210 (e.g., a manual or automatic spreader bar, come-along, hydraulic device, etc. that can pull objects together or push objects apart at a controlled rate and with sufficient force) is temporarily installed between the corresponding truss attachment portions 154a and 154b. More specifically, in the illustrated embodiment the push/pull device 1210 includes a first clevis 1212a on one end and a second clevis 1212b on the opposite end. The clevises 1212 are attached to the body of the push/pull device 1210 by threaded rods 1216 that can be drawn into the body of the push/pull device 1210 or extended out of the body of the push/pull device 1210 by appropriate operation of a manual actuator 1214 (e.g., a ratchet handle). Each of the clevises 1212 can be releasably attached to the corresponding truss attachment portion 154 by a temporary fastener 1218 (e.g., a bolt) that extends through the clevis 1212 and the corresponding aperture 1202. After the push/pull device 1210 has been coupled to the opposing truss attachment portions 154, the actuator 1214 can be moved up and down in the appropriate direction to ratchet the spar end portions 171c and 171d together and/or apart as desired.

To join the first blade segment 116a to the second blade segment 116b in accordance with one embodiment of the disclosure, a second push/pull device (not shown) is operably coupled between the third and fourth truss attachment members 150c, 150d on the first spar 170a, and a third push/pull device (also not shown) is operably coupled between the fifth and sixth truss attachment members 150e, 150f on the third spar 170c, as described above with reference to the second spar 170b. The spars 170 are then simultaneously pulled together by operation of the three push/pull devices 1210 to "dry fit" the end portions 171 and confirm that they are properly aligned. After this has been done, the push/pull devices 1210 are operated to separate the spar end portions 171 so that the end portions 171 can be suitably prepared for bonding as described in detail below.

Once the end portions 171 of the spars 170 have been fit checked as described above, the overlapping surfaces of the projections/recesses 174/175 (Figure 10A) of the end portions 171 can be prepared for bonding. In a particular embodiment, the mating surfaces can be prepared for bonding by first sanding with an appropriate grade sandpaper, followed by a cleaning with acetone and/or a wipe with a lint-free cloth, followed by a wipe with isopropyl alcohol. A suitable adhesive (e.g., epoxy, polyurethane, methyl methacrylate, and/or other adhesive) can then be mixed and applied to the mating surfaces of the end portions 171. Enough adhesive is applied to the mating surfaces to adequately cover the zig-zag bond line. A localized or linear spacer made of suitable material can be laid on a surface of each spar 170 horizontal to the length of the spar. The end portions 171 of the spars 170 are then pulled together simultaneously by individual actuation of the, e.g. three, push/pull devices 1210. As the end portions 171 move together, adhesive that squeezes out of the joint can be wiped away. In another arrangement, the blade assembler can first draw these end portions 171 together, and then inject adhesive between overlapping projections and recesses. The overlapping end portions 171 can then be clamped together with a pressure enclosure tool as described in more detail below. After the end portions of the blade segments 116 have been suitably joined, the truss struts (e.g., truss struts 143) can be installed in the bay between the ribs 142 using, e.g., the apertures 1202 in the attachment members 150. After the diagonal truss struts have been attached to the blade segments, the push/pull device(s) 1210 can be removed. The blade segments 116 can then be prepared for installation of skin panels onto the ribs 142.

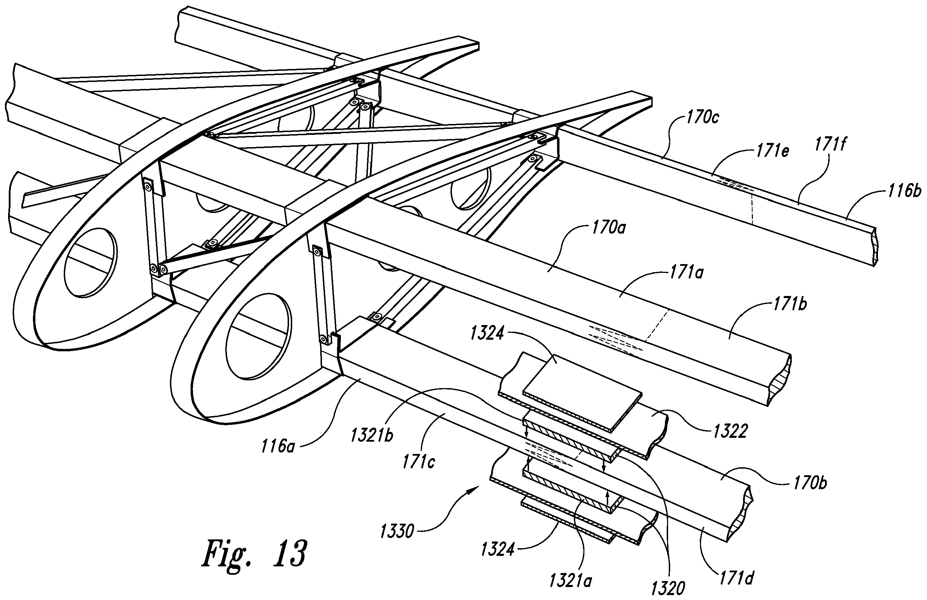

Figure 13 is a partially exploded, schematic isometric view of the joint between the first blade segment 116a and the second blade segment 116b illustrating an apparatus and method for clamping and curing the joint end portions 171 of the spars 170 in accordance with an embodiment of the disclosure. In Figure 13, the push/pull device(s) 1210 have been removed for purposes of clarity, but those of ordinary skill in the art will understand that the push/pull device(s) 1210 can be left in place during the clamping and curing of the spar joints if desirable.

In the illustrated embodiment, a clamping assembly 1330 can include a clamping tool 1320 that includes at least two opposing plate portions 1321a, 1321b that clamp inwardly on the joint between the engaged spar end portions 171c, 171d. The clamping tool 1320 applies adequate pressure to the joint during the adhesive curing process. The clamping tool 1320 can include manually operable clamping devices (e.g., such as C-clamps) and/or automatic clamping devices, such as hydraulic clamps. In addition, a vacuum blanket or bag 1322 can be wrapped around the joint and evacuated to remove any air pockets from the adhesive bond line. Moreover, in one particular aspect of this embodiment, a heating element 1324 (e.g., an electro-thermal heating element) can also be positioned locally around the joint to ensure proper curing of the adhesive at a suitable temperature for a suitable period of time (e.g., 24 hours). In the other embodiments, the heating element 1324, the vacuum bag 1322, and/or the clamping tool 1320 can be omitted, and the bonded joint can be positioned in an autoclave or other suitable apparatus for elevating the temperature and/or pressure of the joint to ensure suitable curing of the adhesive. Although only a single clamping assembly 1330 is illustrated in Figure 13 for purposes of clarity, it will be understood that similar or equivalent pressure enclosure tools can also be used to simultaneously cure the joints formed between the other end portions 171a, 171b, 171e, 171f associated with the first spar 170a and the third spar 170c. The methods and system described above for joining turbine blade spars together can also be used at the other blade segment joints.

In other embodiments the spar 170 can be joined using techniques other than those described above with reference to Figures 11A-11E, for example, those disclosed in WO2010/065928. Still further techniques include, but are not limited to the use of fasteners, bolts arranged in multiple directions, shear connecting tension bolts, scarf joints, butt joints and laminated overlays.

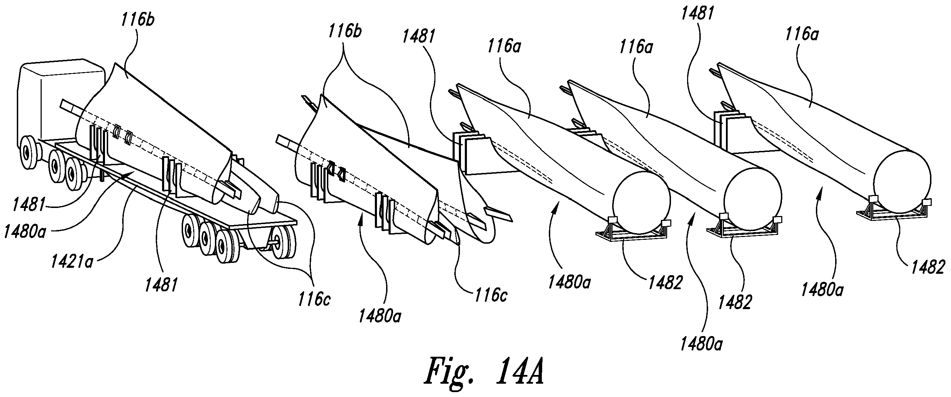

The foregoing process can be used to connect the first and second blade segments, and then to connect the second and third blade segments. The order in which the process steps are completed can be changed in other embodiments. For example, the second and third segments can be attached to each other first, and then the first segment can be attached to the second segment. Once the spars 170 of adjacent blade segments are connected, a section of skin 115 (Figure 2) is laid up or otherwise positioned over the joint to form a smooth continuous skin from one blade segment to the next. The completed blade may then be attached to a crane or other suitable structure for lifting the blade, and each of the now-attached segments can be decoupled from the corresponding supports 123 shown in Figure 10D. If necessary, the blade skin can be patched or otherwise treated to seal any temporary holes or openings necessitated by the temporary connection to the supports 123. Once the blade is finished, it can be lifted from the platforms and attached to the hub 105 shown in Figure 1. In another embodiment, the completed blade can be moved from the assembly site to the wind turbine via one of the transport devices described above, or via a different transport device, as described further below with reference to Figures 14A-14F.

Figures 14A-14F illustrate systems and methods for moving and assembling wind turbine blade segments in accordance with further embodiments of the disclosure. Referring first to Figure 14A, multiple blade segments may be carried by a single transport device. For example, Figure 14A illustrates a first transport device 1421a (e.g., a tractor-trailer rig generally similar to those described above) having a first carrier 1480a that simultaneously supports multiple blade segments. In a particular embodiment shown in Figure 14A, the multiple blade segments include one second blade segment 116b, and two third blade segments 116c. The first carrier 1480a can include two fixture elements 1481 that hold the blade segments in a fixed position relative to the first transport device 1421a.

Figure 14A also illustrates another first carrier 1480a that supports two second blade segments 116b and one third blade segment 116c, in position for transport by a first transport device 1421a. Figure 14A still further illustrates additional first carriers 1480a, each of which supports one first blade segment 116a. In a particular embodiment, the first blade segments 116a are too large to allow multiple blade segments to be carried on the same first transport device 1421a. Accordingly, each first blade segment 116c is transported individually. The first carriers 1480a positioned to carry the first blade segments 116a can include a corresponding fixture element 1481 and an adjustment element 1482. The adjustment element 1482 allows the first blade segment 116a to be rotated off-axis, as shown in Figure 14A, so that is will fit under highway overpasses. The fixture element 1481 holds the blade in this rotated configuration. Using the arrangement above, five first transport devices 1421a can be used to transport all nine blade segments used for a three-blade turbine.

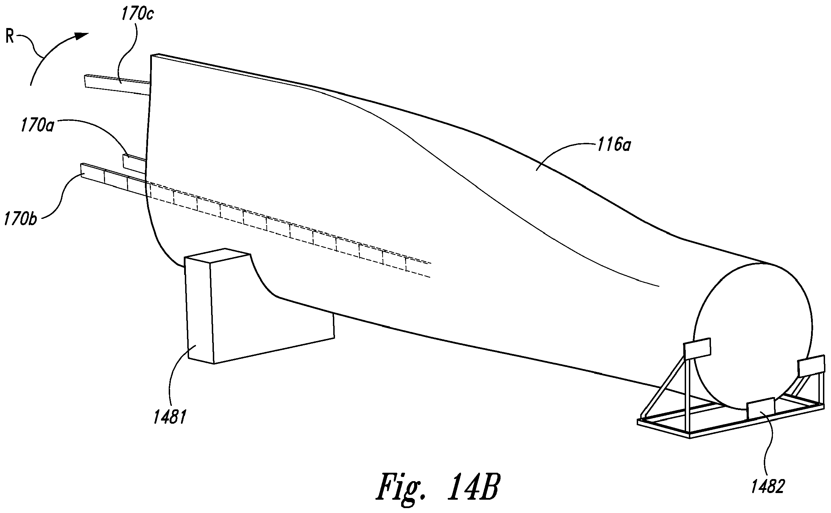

In Figure 14B, the first blade segment 116a has been removed from the first transport device 1421a. An operator has rotated the first blade segment 116a (as indicated by arrow R) under the guidance and control of the adjustment element 1482, so that the blade now has a vertical position. A new fixture element 1481 is then positioned beneath the first blade segment 116a to support it in this new orientation.

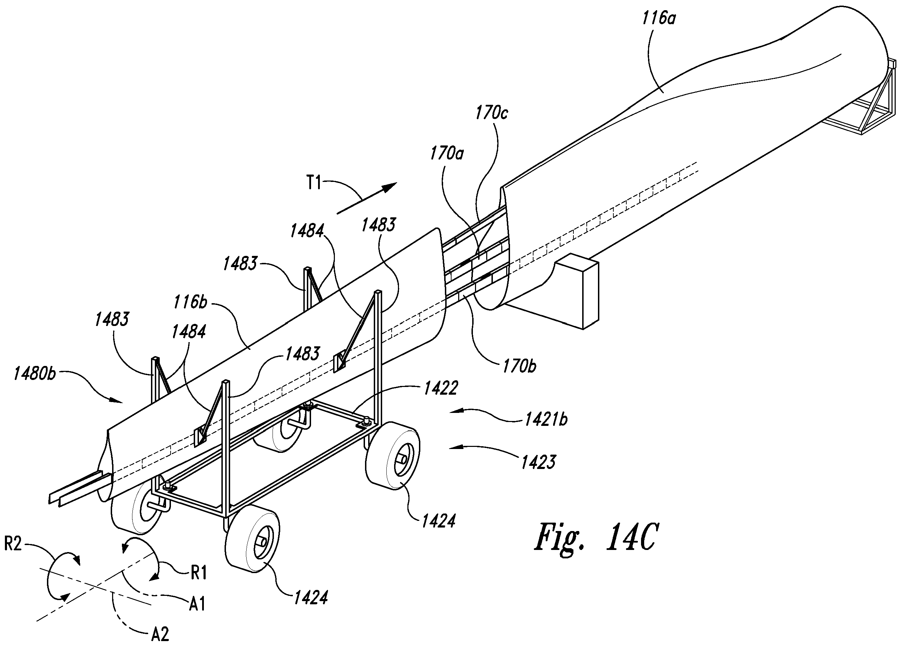

Referring next to Figure 14C, the second blade segment 116b has been removed from the first transport device 1421a (Figure 14A) and placed on a second transport device 1421b. The second transport device 1421b can include a chassis 1422 carrying a positioning unit 1423. The positioning unit 1423 can include multiple wheels 1424 (e.g., four castor-type wheels are shown in Figure 14C) outfitted with large, all-terrain tires 1425. Accordingly, the second transport device 1421b can be rolled along the ground at an assembly site that has unpaved, unimproved or only rudimentarily improved surfaces. The second transport device 1421b can further include a second carrier 1480b that supports the second blade segment 116b. The second carrier 1480b can include multiple upwardly projecting support members 1483, each of which carriers an engagement member 1484. In a particular embodiment, the individual engagement members 1484 include straps or other flexible tension elements having attachment features 1485 (e.g., clips, hooks, buckles, or other suitable arrangements) that are releasably attached to the second blade segment 116b. The engagement members 1484 are attached to the corresponding support members 1483 with an adjustable arrangement, e.g., a releasable ratchet device.

In operation, an operator can adjust the axial position, lateral position, and yaw angle of the second blade segment 116b by rolling the second transport device 1480b appropriately. The operator can adjust the vertical position of the second blade segment 116b by adjusting each of the engagement members 1484 (e.g., by the same amount). The operator can adjust a rotation angle R1 (e.g., a roll angle) of the second blade segment 116b relative to a first axis A1 by adjusting the engagement members 1484 on one side of the first axis A1 by a different amount than the engagement members 1484 on the other side of the first axis A1. The operator can adjust a transverse rotation angle R2 (e.g., a pitch angle) of the second blade segment 116b relative to a second (transverse) axis A2 by adjusting fore and aft engagement members 1484 by different amounts. When the second blade segment 116b has the proper orientation relative to the first blade segment 116a, the operator can roll the second transport device 1421b toward the first blade segment 116a as indicated by arrow T1 to align the ends of the spars 170a-170c carried by each of the first and second blade segment 116a, 116b. The foregoing operations can be completed manually, or via powered drivers (e.g., motors) or other devices.

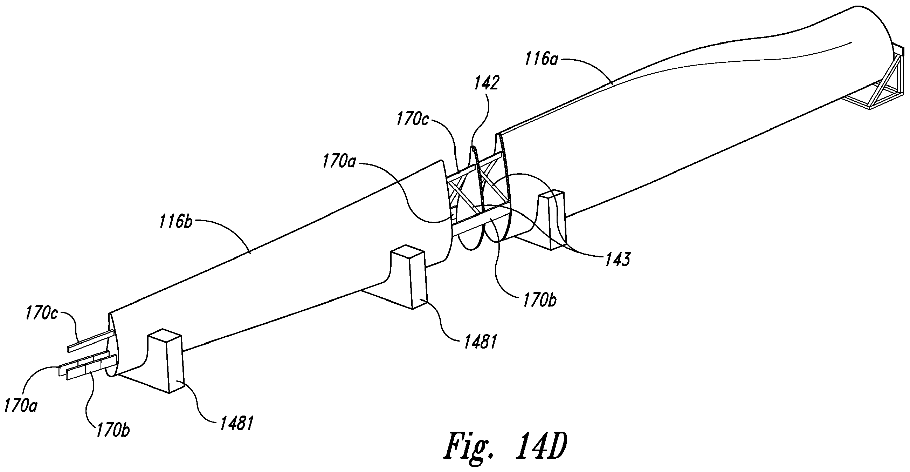

In Figure 14D, the second transport device 1421b has been removed, and the second blade segment 116b is now supported by fixtures 1481 that carry the second blade segment 116b in the proper position at the assembly site. The second blade segment 116b has been attached to the first blade segment 116a by connecting the ends of the corresponding spars 170a-170c, adding a rib 142, and adding truss members 143 at the connection location.

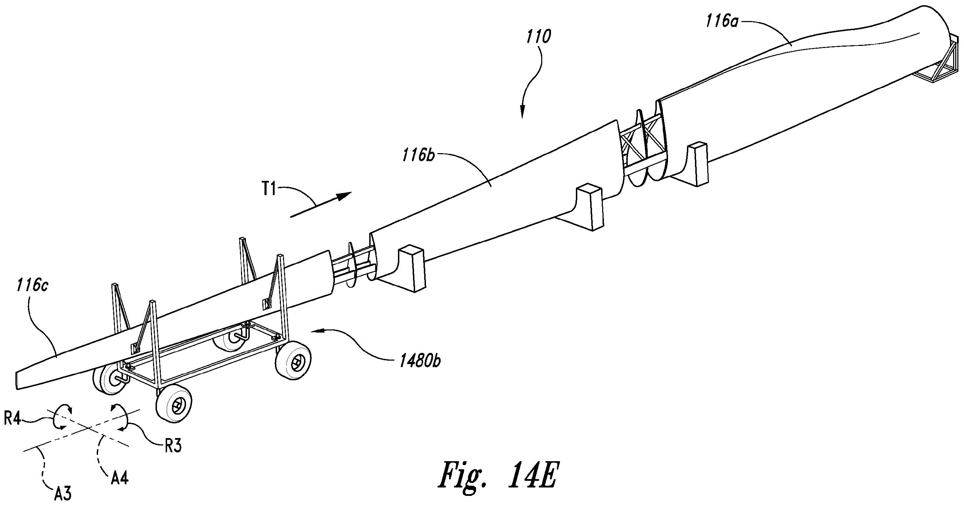

In Figure 14E, a process generally similar to that described above with reference to Figures 14C and 14D is conducted to attach the third blade segment 116c to the second blade segment 116b. As discussed above, the overall blade 110 may be curved so that the axes along which the second and third blade segments 116b, 116c are attached may be different than the axes along which the first and second blade segments 116a, 116b are attached. Because the second transport device 1480b is easily movable, the operator can use the same or a generally similar second transport device 1480b to move the third blade segment 116c toward the second blade segment 116b. Accordingly, the operator can adjust the vertical position of the third blade segment 116c, as well as a rotation angle R3 relative to a third (longitudinal) axis A3, and a rotation angle R4 relative to a fourth (transverse) axis A4. The operator can then move the third blade segment 116c via the second transport device 1480b toward the second blade segment 116b, as indicated by arrow T3, and connect the two segments 116b, 116c using any of the techniques described above.

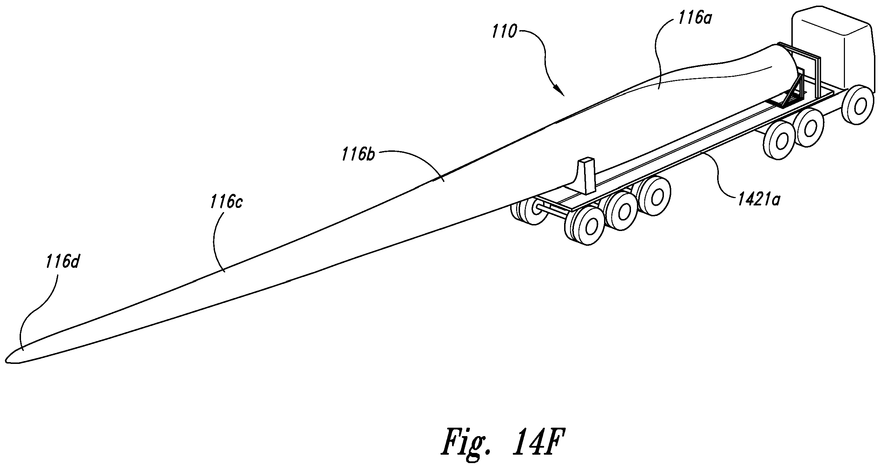

Figure 14F illustrates the assembled blade 110, with a tip section 116d attached to the third blade segment 116c. In a particular embodiment, the assembled blade 110 can now be repositioned on the first transport device 1421a with a significant portion of the blade 110 overhanging the first transport device 1421a. While this arrangement would not be suitable for transporting the blade over typical highways, it can be used to transport the blade 110 from an assembly site (e.g., located at a wind farm) to a particular wind turbine (also located at the wind farm). Accordingly, the first transport device 1421a can be driven at very low speed over improved or unimproved roads (e.g., at the wind farm) having gradual radiuses of curvature, without damaging the wind turbine blade 110 or structures along the way. Typically, the transport distances and speeds associated with moving the assembled blade from the assembly site to the wind turbine will be less (e.g., significantly less) than the distances and speeds associated with transporting the individual blade segments to the assembly site.

One feature of an embodiment described above with reference to Figures 14A-14F is that the blade segments 116 can be assembled at an unimproved assembly site (which may be typical at a wind farm) without impacting the accuracy which with the blade segments 116 are attached. This process can be conducted economically by using fewer first transport devices 1480a to transport the blade segments 116 to the site, and/or by using a single second transport device 1480b to sequentially assemble multiple blade segments. Still another feature of at least some of the foregoing embodiments is that the assembled blade can be transported from the assembly site to the wind turbine using a standard first transport device 1480a (e.g., an over-the-highway tractor-trailer rig), even though the assembled blade 110 is over-length (by 50%, 60%, 70%, or another significant amount), and even though the road between the assembly site and the wind turbine may not be up to the standards of a typical highway.

Another feature of several of the foregoing embodiments is that the blade segments can be easily transported from one or more manufacturing facilities to an installation site using conventional transport systems e.g., highway trucks, trains, or barges. Because the blade is segmented, it is easier to transport than it would be if it were completely assembled at the manufacturing site. In addition, the transport platforms can include guide structures that accurately align each of the blade segments relative to neighboring segments to facilitate accurate and repeatable assembly techniques. This in turn can produce more uniform blades, despite the fact that the blades are segmented. As a result, the blades can operate more efficiently when installed on corresponding wind turbines, and can reduce maintenance costs over the life-time of the blades.

From the foregoing, it will be appreciated that specific embodiments have been described herein for purposes of illustration, but that various modifications may be made without deviating from the present disclosure. For example, the guide structures described above may have arrangements other than nested portions that are each movable along a single axis. The guide structures may include features other than rollers to control the motion of the supports relative to each other. In another embodiment, the guide structure can be configured to facilitate restricted rotational motion, in addition to restricted linear motion. The supports can have other arrangements, including arrangements in which the supports extend above the blade and straddle the blade, with the blade supported (e.g., suspended) from above. In still further embodiments, not all the transport platforms 121 provide axial motion for the corresponding blade segment. For example, the second blade segment 116b can have a fixed axial position relative to the second transport platform 121b, and the first and third segments 116a, 116c can move toward opposing ends of the centrally located second segment 116b. While Figure 3 illustrates two supports 123 for each blade segment, in other embodiments, the guide structure 122 can include other arrangements, including a single support 123 at each transport platform 121, or more than two supports 123 at each transport platform 121. The wind turbine blades can have structures other than those expressly disclosed herein, but can still be transported, aligned and/or assembled using the systems and methods described above. For example, in other embodiments these methods and systems can be used to join turbine blade structures together that extend in chordwise directions. In still further embodiments, these methods and systems can be used to join leading or trailing edge members together, or to join portions of a segmented root together.

Certain aspects of the disclosure described above in the context of particular embodiments may be combined or eliminated in other embodiments. For example, the motorized or otherwise powered actuators described in the context of providing lateral and axial motion may be applied to vertical motion in particular embodiments. The carriers and guide structures described in the context of the first transport devices 121, 1421a may be combined with the second transport device 1421b in particular embodiments. Further, while advantages associated with certain embodiments have been described in the context of those embodiments, other embodiments may also exhibit such advantages. Not all advantages need necessarily exhibits such advantages to follow within the scope of the present disclosure. Accordingly, the disclosure and associated technology can encompass other embodiments not expressly shown or described herein.

## Claims

1. A system for assembling spanwise segments (116) of a wind turbine blade (110), comprising:
a wheeled first transport device (121a) being movable as a unit from a blade fabrication site to a blade assembly site, the first transport device having a first carrier (180) positioned to carry a first spanwise segment (116a) of a wind turbine blade with the first segment aligned along a first blade axis;
a wheeled second transport device (121b) being movable as a unit from a blade fabrication site to the blade assembly site, the second transport device having a second carrier (180) positioned to carry a second spanwise segment (116b) of a wind turbine blade with the second segment aligned along a second blade axis; and
a guide structure (122) carried by at least one of the first and second transport devices (121a, 121b), the guide structure being coupled between the at least one transport device and a corresponding one of the carriers (180), the guide structure having a motion path (A1) aligned with a corresponding one of the first and second blade axes, the guide structure being positioned to guide the corresponding carrier along the motion path toward the other of the first and second transport devices.

2. The system of claim 1 wherein the guide structure (122) is positioned to guide the corresponding carrier in a linear manner.

3. The system of claim 1, further comprising a drive mechanism (162) carried by at least one of the first and second transport devices (121a, 121b), the drive mechanism being positioned to drive at least one of the first and second carriers (180) relative to the other along the guide path.

4. The system of claim 1 wherein the guide structure (122) includes a base portion (124) carried by the first transport device (121a), a first portion (126) carried by the base portion and movable relative to the base portion along a restricted first motion path, and a second portion (127) carried by the first portion and movable relative to the first portion along a restricted second motion path, transverse to the first motion path.

5. The system of claim 4 wherein the second portion (127) includes a roller assembly that is movable relative to the first portion (126) and that is releasably engaged with the first carrier (180).

6. The system of claim 5 wherein the first portion (126) includes a first roller assembly that is engaged with the base (124) and rollable relative to the base along the first motion path, and wherein the second portion (127) includes a second roller assembly that is engaged with the first portion and rollable relative to the first portion along the second motion path.

7. The system of claim 4, further comprising:
a first driver (162) operatively coupled between the base (124) and the first portion (126) to move the first portion relative to the base; and
a second driver (163) operatively coupled between the first portion (126) and the second portion (127) to move the second portion relative to the first portion.

8. The system of claim 1 wherein the first and second transport devices (121a, 121b) include corresponding highway truck trailers.

9. The system of claim 4 wherein the base (124) includes an axial guide (125), and wherein the first portion (127) includes a roller assembly, and wherein the roller assembly include a first, load-bearing roller positioned to rotate about a generally horizontal axis, and a second, guide roller positioned to rotate about a non-horizontal axis.

10. The system of claim 1 wherein the guide structure (122) is a first guide structure positioned between the first transport device (121a) and the first carrier (180), the first carrier being movable along the first blade axis, and wherein the system further comprises a second guide structure positioned between the second transport device and the second carrier, the second carrier being movable along the second blade axis.

11. The system of claim 1, further comprising:
a driver device (162) operatively coupled to the guide structure (122) to move the corresponding carrier (180) along the motion path;
a sensor positioned to sense a location of the carrier; and
a controller operatively coupled to the driver device and the sensor, the controller being programmed with instructions that, when executed, automatically activate the driver to move the carrier in response to a signal received from the sensor.

12. A method for assembling spanwise segments (116) of a wind turbine blade (110), comprising:
transporting a first assembled spanwise segment (116a) of a wind turbine blade as a unit from a blade fabrication site to a blade assembly site while the first blade segment is carried by a first transport device (121a);
transporting a second assembled spanwise segment (121b) of a wind turbine blade as a unit from a blade fabrication site to the blade assembly site while the second blade segment is carried by a second transport device (121b);
at the blade assembly site, moving at least one of the first and second blade segments (116a, 116b) relative to the other along a restricted guide path, while the first blade segment is carried by the first transport (121a) device and the second blade segment is carried by the second transport device (121b);
connecting the first and second blade segments (116a, 116b) to each other while the first blade segment is carried by the first transport device (121a) and the second segment blade section is carried by the second transport device (121b);
separating the connected first and second blade segments (116a, 116b) from the first and second transport devices (121a, 121b); and
mounting the first and second blade segments as a unit to a wind turbine.

13. The method of claim 12 wherein separating the first and second blade segments (116a, 116b) from the first and second transport devices (121a, 121b) includes:
disengaging the second blade segment (116b) from the second transport device (121b) while the connected first and second blade segments are carried by the first transport device (121a);
carrying the connected first and second blade segments (116a, 116b) from the assembly site to the wind turbine with the first transport device (121a); and
removing the connected first and second blade segments (116a, 116b) as a unit from the first transport device.

14. The method of claim 12 wherein transporting the first assembled spanwise segment (116a) includes transporting the first assembled spanwise segment with a carrier (180) while the carrier has a fixed position relative to the first transport device (121a), and wherein the method further comprises removably positioning a guide structure (122) between the carrier and the first transport device prior to moving the first blade segment, and wherein moving at least one of the first and second blade segments relative to the other along a restricted guide path includes moving the first blade segment along a restricted guide path established by the guide structure.

## Patentansprüche

1. System zur Montage von Segmenten (116) eines Windturbinenblatts (110) in Spannweitenrichtung, umfassend:
eine erste Transportvorrichtung (121a) auf Rädern, die als Einheit vom Herstellungsort des Blatts zum Montageort des Blatts beweglich ist, wobei die erste Transportvorrichtung einen ersten Träger (180) aufweist, der zum Tragen eines ersten Segments (116a) eines Windturbinenblatts in Spannweitenrichtung entlang einer ersten Blattachse positioniert ist;
eine zweite Transportvorrichtung (121b) auf Rädern, die als Einheit vom Herstellungsort des Blatts zum Montageort des Blatts beweglich ist, wobei die zweite Transportvorrichtung einen zweiten Träger (180) aufweist, der zum Tragen eines zweiten Segments (116b) eines Windturbinenblatts in Spannweitenrichtung entlang einer zweiten Blattachse positioniert ist; und
eine Führungsstruktur (122) getragen von mindestens einer der ersten oder zweiten Transportvorrichtung (121a, 121b), wobei die die Führungsstruktur zwischen mindestens einer Transportvorrichtung und einem entsprechenden der Träger (180) gekoppelt ist, wobei die Führungsstruktur eine Bewegungsbahn (A1) aufweist, die mit einer entsprechenden der ersten und zweiten Blattachse ausgerichtet ist, wobei die Führungsstruktur positioniert ist, um den entsprechenden Träger entlang der Bewegungsbahn in Richtung der anderen der ersten und zweiten transportvorrichtung zu führen;

2. System nach Anspruch 1, wobei die Führungsstruktur (122) positioniert ist, um den entsprechenden Träger in linearer Art zu führen.

3. System nach Anspruch 1, weiter einen Antriebsmechanismus (162) umfassend, der von mindestens einem der ersten oder zweiten Transportvorrichtung (121a, 121b) getragen wird, wobei der Antriebsmechanismus positioniert ist, um mindestens einen des ersten und zweiten Trägers (180) relativ zum anderen entlang der Führungsbahn anzutreiben.

4. System nach Anspruch 1, wobei die Führungsstruktur (122) einen von der ersten Transportvorrichtung (121a) getragenen Basisabschnitt (124), einen ersten vom Basisabschnitt getragenen und relativ zum Basisabschnitt entlang einer begrenzten ersten Bewegungsbahn beweglichen ersten Abschnitt (126) und einen vom ersten Abschnitt getragenen und relativ zum ersten Abschnitt entlang einer begrenzten zweiten Bewegungsbahn quer zur ersten Bewegungsbahn beweglichen zweiten Abschnitt (127) enthält.

5. System nach Anspruch 4, wobei der zweite Abschnitt (127) eine Rollanordnung enthält, der relativ zum ersten Abschnitt (126) beweglich und lösbar mit dem ersten Träger (180) eingerastet ist.

6. System nach Anspruch 5, wobei der erste Abschnitt (126) eine erste Rollanordnung enthält, die in der Basis (124) eingerastet und relativ zur Basis entlang des ersten Bewegungspfads rollbar ist, und worin der zweite Abschnitt (127) eine zweite Rollanordnung enthält, die in dem ersten Abschnitt eingerastet und relativ zum ersten Abschnitt entlang des zweiten Bewegungspfads rollbar ist.

7. System nach Anspruch 4, weiter umfassend:
einen ersten Antrieb (162), betrieblich zwischen der Basis (124) und dem ersten Abschnitt (126) gekoppelt, zur Bewegung des ersten Abschnitts relativ zur Basis; und
einen zweiten Antrieb (163), betrieblich zwischen dem ersten Abschnitt (126) und dem Abschnitt Teil (127) gekoppelt, zur Bewegung des zweiten Abschnitts relativ zum ersten Abschnitt.

8. System nach Anspruch 1, worin die erste und zweite Transportvorrichtung (121a, 121b) entsprechende autobahntaugliche LKW-Anhänger enthält.

9. System nach Anspruch 4, worin die Basis (124) eine axiale Führung (125) enthält, und worin der erste Abschnitt (127) eine Rollanordnung enthält, und worin die Rollanordnung eine erste Tragrolle enthält, die positioniert ist, um sich um eine im Allgemeinen horizontale Achse zu drehen, und eine zweite Führungsrolle, die positioniert ist, um sich um eine nicht-horizontale Achse zu drehen.

10. System nach Anspruch 1, worin die Führungsstruktur (122) eine erste, zwischen der ersten Transportvorrichtung (121a) und dem ersten Träger (180) positionierte ersten Führungsstruktur ist, wobei der erste Träger entlang der ersten Blattachse beweglich ist, und worin das System weiter eine zweite, zwischen der zweiten Transportvorrichtung und dem zweiten Träger positionierte zweite Führungsstruktur enthält, wobei der zweite Träger entlang der zweiten Blattachse beweglich ist.

11. System nach Anspruch 1, weiter umfassend:
eine Antriebsvorrichtung (162), die betrieblich mit der Führungsstruktur (122) gekoppelt ist, um dem entsprechenden Träger (180) entlang der Bewegungsbahn zu bewegen;
einen Sensor, der positioniert ist, um eine Stelle des Trägers abzutasten; und
eine Steuerung, die betrieblich mit der Antriebsvorrichtung und dem Sensor gekoppelt ist, wobei der Regler mit Befehlen programmiert ist, die, wenn sie ausgeführt werden, den Antrieb automatisch zur Bewegung des Trägers als Reaktion auf ein vom Sensor erhaltenes Signal aktiviert.

12. Verfahren zur Montage von Segmenten (116) eines Windturbinenblatts (110) in Spannweitenrichtung, umfassend:
Transport eines ersten montierten Segments (116a) eines Windturbinenblatts in Spannweitenrichtung als eine Einheit vom Herstellungsort des Blatts zum Montageort des Blatts, wobei das erste Blattsegment von einer ersten Transportvorrichtung (121a) getragen wird;
Transport eines zweiten montierten Segments (121b) eines Windturbinenblatts in Spannweitenrichtung als eine Einheit vom Herstellungsort des Blatts zum Montageort des Blatts, wobei das zweite Blattsegment von einer zweiten Transportvorrichtung (121b) getragen wird;
am Montageort des Blatts die Bewegung mindestens eines des ersten und zweiten Blattsegments (116a, 116b) relativ zum anderen entlang einer begrenzten Führungsbahn, wobei das erste Blattsegment von der ersten Transportvorrichtung (121a) getragen wird, und das zweite Blattsegment von der zweiten Transportvorrichtung (121b) getragen wird;
Verbinden des ersten und zweiten Blattsegments (116a, 116b) miteinander, wobei das erste Blattsegment von der ersten Transportvorrichtung (121a) getragen wird, und das zweite Blattsegment von der zweiten Transportvorrichtung (121b) getragen wird;
Trennen der verbundenen ersten und zweiten Blattsegmente (116a, 116b) von den ersten und zweiten Transportvorrichtungen (121a, 121b); und
Montieren des ersten und zweiten Blattsegments als Einheit an eine Windturbine.

13. Verfahren nach Anspruch 12, wobei das Trennen des ersten und zweiten Blattsegments (116a, 116b) von der ersten und zweiten Transportvorrichtung (121a, 121b) enthält:
Lösen des zweiten Blattsegments (116b) von der zweiten Transportvorrichtung (121b), wobei die verbundenen ersten und zweiten Blattsegmente von der ersten Transportvorrichtung (121a) getragen werden;
Tragen der verbundenen ersten und zweiten Blattsegmente (116a, 116b) vom Montageort zur Windturbine mit der ersten Transportvorrichtung (121a); und
Entfernen der verbundenen ersten und zweiten Blattsegmente (116a, 116b) als Einheit von der ersten Transportvorrichtung.

14. Verfahren nach Anspruch 12, wobei der Transport des ersten montierten Segments in Spannweitenrichtung (116a) den Transport des ersten montierten Segments In Spannweitenrichtung mit einem Träger (180) enthält, wobei der Träger in Bezug auf die erste Transportvorrichtung (121a) eine feste Position aufweist, und wobei das Verfahren weiter das lösbare Positionieren einer Führungsstruktur (122) zwischen dem Träger und der ersten Transportvorrichtung vor der Bewegung des ersten Blattsegments umfasst, und wobei die Bewegung mindestens eines des ersten und zweiten Blattsegments relativ zu dem anderen entlang einer begrenzten Führungsbahn die Bewegung des ersten Blattsegments entlang einer begrenzten Führungsbahn enthält, die durch die Führungsstruktur erstellt wird.

## Revendications

1. Système pour assembler des segments d'envergure (116) d'une pale d'éolienne (110), comprenant :
un premier dispositif de transport à roues (121a) étant mobile de façon monobloc d'un site de fabrication de pale à un site d'assemblage de pale, le premier dispositif de transport possédant un premier transporteur (180) positionné pour transporter un premier segment d'envergure (116a) d'une pale d'éolienne avec le premier segment aligné le long d'un premier axe de pale ;
un second dispositif de transport à roues (121b) étant mobile de façon monobloc d'un site de fabrication de pale au site d'assemblage de pale, le second dispositif de transport possédant un second transporteur (180) positionné pour transporter un second segment d'envergure (116b) d'une pale d'éolienne avec le second segment aligné le long d'un second axe de pale ; et
une structure de guidage (122) transportée par au moins l'un des premier et second dispositifs de transport (121a, 121b), la structure de guidage étant accouplée entre l'au moins un dispositif de transport et l'un correspondant des transporteurs (180), la structure de guidage possédant un trajet de mouvement (A1) aligné avec l'un correspondant des premier et second axes de pale, la structure de guidage étant positionnée pour guider le transporteur correspondant le long du trajet de mouvement vers l'autre des premier et second dispositifs de transport.

2. Système selon la revendication 1, dans lequel la structure de guidage (122) est positionnée pour guider le transporteur correspondant de manière linéaire.

3. Système selon la revendication 1, comprenant en outre un mécanisme d'entraînement (162) transporté par au moins l'un des premier et second dispositifs de transport (121a, 121b), le mécanisme d'entraînement étant positionné pour entraîner au moins l'un des premier et second transporteurs (180) par rapport à l'autre le long du trajet de guidage.

4. Système selon la revendication 1, dans lequel la structure de guidage (122) inclut une portion de base (124) transportée par le premier dispositif de transport (121a), une première portion (126) transportée par la portion de base et mobile par rapport à la portion de base le long d'un premier trajet de mouvement limité, et une seconde portion (127) transportée par la première portion et mobile par rapport à la première portion le long d'un second trajet de mouvement, transversal au premier trajet de mouvement.

5. Système selon la revendication 4, dans lequel la seconde portion (127) inclut un ensemble de galets qui est mobile par rapport à la première portion (126) et qui est en prise libérable avec le premier transporteur (180).

6. Système selon la revendication 5, dans lequel la première portion (126) inclut un premier ensemble de galets qui est en prise avec la base (124) et peut rouler par rapport à la base le long du premier trajet de mouvement, et dans lequel la seconde portion (127) inclut un second ensemble de galets qui est en prise avec la première portion et peut rouler par rapport à la première portion le long du second trajet de mouvement.

7. Système selon la revendication 4, comprenant en outre :
un premier dispositif d'entraînement (162) fonctionnellement accouplé entre la base (124) et la première portion (126) pour déplacer la première portion par rapport à la base ; et
un second dispositif d'entraînement (163) fonctionnellement accouplé entre la première portion (126) et la seconde portion (127) pour déplacer la seconde portion par rapport à la première portion.

8. Système selon la revendication 1, dans lequel les premier et second dispositifs de transport (121a, 121b) incluent des remorques de camion routier correspondantes.

9. Système selon la revendication 4, dans lequel la base (124) inclut un guidage axial (125), et dans lequel la première portion (127) inclut un ensemble de galets, et dans lequel l'ensemble de galets inclut un premier galet porteur positionné pour entrer en rotation autour d'un axe généralement horizontal, et un second galet de guidage positionné pour entrer en rotation autour d'un axe non horizontal.

10. Système selon la revendication 1, dans lequel la structure de guidage (122) est une première structure de guidage positionnée entre le premier dispositif de transport (121a) et le premier transporteur (180), le premier transporteur étant mobile le long du premier axe de pale, et dans lequel le système comprend en outre une seconde structure de guidage positionnée entre le second dispositif de transport et le second transporteur, le second transporteur étant mobile le long du second axe de pale.

11. Système selon la revendication 1, comprenant en outre :
un dispositif d'entraînement (162) fonctionnellement accouplé à la structure de guidage (122) pour déplacer le transporteur correspondant (180) le long du trajet de mouvement ;
un capteur positionné pour détecter un emplacement du transporteur ; et
un dispositif de commande fonctionnellement accouplé au dispositif d'entraînement et au capteur, le dispositif de commande étant programmé avec des instructions qui, lorsqu'elles sont exécutées, activent automatiquement le dispositif d'entraînement pour déplacer le transporteur en réponse à un signal reçu du capteur.

12. Procédé pour assembler des segments d'envergure (116) d'une pale d'éolienne (110), comprenant :
le transport d'un premier segment d'envergure assemblé (116a) d'une pale d'éolienne, de façon monobloc, d'un site de fabrication de pale à un site d'assemblage de pale alors que le premier segment de pale est transporté par un premier dispositif de transport (121a) ;
le transport d'un second segment d'envergure assemblé (121b) d'une pale d'éolienne, de façon monobloc, d'un site de fabrication de pale au site d'assemblage de pale alors que le second segment de pale est transporté par un second dispositif de transport (121b) ;
au site d'assemblage de pale, le déplacement d'au moins l'un des premier et second segments de pale (116a, 116b) par rapport à l'autre le long d'un trajet de guidage limité, alors que le premier segment de pale est transporté par le premier dispositif de transport (121a) et le second segment de pale est transporté par le second dispositif de transport (121b) ;
le raccordement des premier et second segments de pale (116a, 116b) l'un à l'autre alors que le premier segment de pale est transporté par le premier dispositif de transport (121a) et le second segment de section de pale est transporté par le second dispositif de transport (121b) ;
la séparation des premier et second segments de pale raccordés (116a, 116b) à partir des premier et second dispositifs de transport (121a, 121b) ; et
le montage des premier et second segments de pale, de façon monobloc, sur une éolienne.

13. Procédé selon la revendication 12, dans lequel la séparation des premier et second segments de pale (116a, 116b) à partir des premier et second dispositifs de transport (121a, 121b) inclut :
la mise hors de prise du second segment de pale (116b) à partir du second dispositif de transport (121b) alors que les premier et second segments de pale raccordés sont transportés par le premier dispositif de transport (121a) ;
le transport des premier et second segments de pale raccordés (116a, 116b) du site d'assemblage à l'éolienne avec le premier dispositif de transport (121a) ; et
l'enlèvement des premier et second segments de pale raccordés (116a, 116b), de façon monobloc, à partir du premier dispositif de transport.

14. Procédé selon la revendication 12, dans lequel le transport du premier segment d'envergure assemblé (116a) inclut le transport le premier segment d'envergure assemblé avec un transporteur (180) alors que le transporteur présente une position fixe par rapport au premier dispositif de transport (121a), et dans lequel le procédé comprend en outre le positionnement amovible d'une structure de guidage (122) entre le transporteur et le premier dispositif de transport avant le déplacement du premier segment de pale, et dans lequel le déplacement d'au moins l'un des premier et second segments de pale par rapport à l'autre le long d'un trajet de guidage limité inclut le déplacement du premier segment de pale le long d'un trajet de guidage limité établi par la structure de guidage.
